# EUROPEAN PATENT APPLICATION

(11) **EP 4 525 434 A1**
(43) Date of publication of application: **19.03.2025**
(21) Application number: 23827391.6
(22) Date of filing: 25.05.2023
(51) Int. Cl.: H04N 9/31

(54) **ELECTRONIC DEVICE FOR CROPPING AND PROJECTING IMAGE, AND METHOD FOR CONTROLLING SAME**

(30) Priority: 23.06.2022 KR 20220076935; 28.09.2022 KR 20220123689
(71) Applicant: Samsung Electronics Co., Ltd., Suwon-si, Gyeonggi-do 16677 (KR)
(72) Inventor: SOH, Byungseok, Suwon-si Gyeonggi-do 16677 (KR); GOO, Bonseuk, Suwon-si Gyeonggi-do 16677 (KR); KIM, Youngtae, Suwon-si Gyeonggi-do 16677 (KR); SEONG, Kibum, Suwon-si Gyeonggi-do 16677 (KR); LEE, Youngchol, Suwon-si Gyeonggi-do 16677 (KR); LEE, Weonhee, Suwon-si Gyeonggi-do 16677 (KR); JANG, Yongseok, Suwon-si Gyeonggi-do 16677 (KR); CHOI, Eunseok, Suwon-si Gyeonggi-do 16677 (KR)
(74) Representative: Walaski, Jan Filip
(86) International application number: PCT/KR2023/007121
(87) International publication number: WO 2023/249271

(57) **Abstract**

Disclosed is an electronic device. The electronic device comprises: at least one sensor; a projection unit for projecting an image; memory for storing at least one instruction; and at least one processor. The at least one processor: obtains information about a projection surface using the at least one sensor; identifies a first area of interest in an image for projection onto the projection surface; obtains a projection image by cropping part of the image based on the information about the projection surface and information about the first area of interest so that at least a portion of the first area of interest is included; and controls the projection unit to project the projection image on the projection surface.

## Description

### [TECHNICAL FIELD]

The present disclosure relates to an electronic device and a method for controlling the same, and more particularly, to an electronic device for obtaining a projection image by cropping a portion of an image and projecting the obtained projection image on a projection surface, and a method for controlling the same.

### [BACKGROUND ART]

A projector may perform a basic correction operation to project an optimal image to a user. In detail, the basic correction operation may indicate a function of adjusting a projection ratio, a resolution, brightness, a focus, or the like, or a function of changing an image, such as keystone correction.

### [DISCLOSURE]

### [TECHNICAL PROBLEM]

According to an embodiment of the present disclosure, provided is an electronic device including: at least one sensor; a projection unit for projecting an image; a memory for storing at least one instruction; and at least one processor, wherein the at least one processor is configured to obtain information about a projection surface using the at least one sensor. The at least one processor is configured to identify a first area of interest in an image to be projected on the projection surface. The at least one processor is configured to obtain a projection image by cropping a portion of the image to include at least a portion of the first area of interest, based on the information about the projection surface and information about the first area of interest. The at least one processor is configured to control the projection unit to project the projection image on the projection surface.

According to an embodiment of the present disclosure, provided is a method for controlling an electronic device, the method including obtaining information about a projection surface using at least one sensor. The method includes identifying a first area of interest in an image to be projected on the projection surface. The method includes obtaining a projection image by cropping a portion of the image to include at least a portion of the first area of interest, based on the information about the projection surface and information about the first area of interest. The method includes projecting the projection image on the projection surface.

According to an embodiment of the present disclosure, provided is a non-transitory computer-readable recording medium including a program for executing a method for controlling an electronic device, wherein the method includes obtaining information about a projection surface using at least one sensor. The method includes identifying a first area of interest in an image to be projected on the projection surface. The method includes obtaining a projection image by cropping a portion of the image to include at least a portion of the first area of interest, based on the information about the projection surface and information about the first area of interest. The method includes projecting the projection image on the projection surface.

### [TECHNICAL SOLUTION]

According to an embodiment of the present disclosure, provided is an electronic device including: at least one sensor; a projection unit for projecting an image; a memory for storing at least one instruction; and at least one processor, wherein the at least one processor is configured to obtain information about a projection surface using the at least one sensor. The at least one processor is configured to identify a first area of interest in an image to be projected on the projection surface. The at least one processor is configured to obtain a projection image by cropping a portion of the image to include at least a portion of the first area of interest, based on the information about the projection surface and information about the first area of interest. The at least one processor is configured to control the projection unit to project the projection image on the projection surface.

According to an embodiment of the present disclosure, provided is a method for controlling an electronic device, the method including obtaining information about a projection surface using at least one sensor. The method includes identifying a first area of interest in an image to be projected on the projection surface. The method includes obtaining a projection image by cropping a portion of the image to include at least a portion of the first area of interest, based on the information about the projection surface and information about the first area of interest. The method includes projecting the projection image on the projection surface.

According to an embodiment of the present disclosure, provided is a non-transitory computer-readable recording medium including a program for executing a method for controlling an electronic device, wherein the method includes obtaining information about a projection surface using at least one sensor. The method includes identifying a first area of interest in an image to be projected on the projection surface. The method includes obtaining a projection image by cropping a portion of the image to include at least a portion of the first area of interest, based on the information about the projection surface and information about the first area of interest. The method includes projecting the projection image on the projection surface.

### [DESCRIPTION OF DRAWINGS]

FIG. 1 is a perspective view showing an appearance of an electronic device according to various embodiments of the present disclosure.
FIG. 2 is a block diagram showing a configuration of the electronic device according to the various embodiments of the present disclosure.
FIG. 3 is a block diagram showing a detailed configuration of the electronic device according to the various embodiments of the present disclosure.
FIG. 4 is a perspective view showing an appearance of the electronic device according to the various embodiments of the present disclosure.
FIG. 5 is a perspective view showing an appearance of the electronic device according to the various embodiments of the present disclosure.
FIG. 6 is a perspective view showing an appearance of the electronic device according to the various embodiments of the present disclosure.
FIG. 7 is a perspective view showing an appearance of the electronic device according to the various embodiments of the present disclosure.
FIG. 8 is a perspective view showing an appearance of the electronic device according to the various embodiments of the present disclosure.
FIG. 9 is a perspective view showing an appearance of the electronic device according to the various embodiments of the present disclosure.
FIG. 10 is a flowchart for explaining a method for the electronic device to obtain information about a projection surface according to the various embodiments of the present disclosure.
FIG. 11 is a view for explaining a method for the electronic device to obtain information about a projection surface according to the various embodiments of the present disclosure.
FIG. 12 is a flowchart for explaining a method for the electronic device to crop an image according to the various embodiments of the present disclosure.
FIGS. 13A to 13C are views for explaining a method for the electronic device to identify an area of interest according to the various embodiments of the present disclosure.
FIG. 14 is a flowchart for explaining a method for the electronic device to crop an image according to the various embodiments of the present disclosure.
FIGS. 15A and 15B are views for explaining a method for the electronic device to crop an image according to the various embodiments of the present disclosure.
FIGS. 16A to 16C are views for explaining a method for the electronic device to crop an image according to the various embodiments of the present disclosure.
FIG. 17 is a flowchart for explaining a method for the electronic device to crop an image according to the various embodiments of the present disclosure.
FIGS. 18A to 18E are views for explaining a method for the electronic device to project an image according to the various embodiments of the present disclosure.
FIGS. 19A to 19C are views for explaining a method for the electronic device to crop an image according to the various embodiments of the present disclosure.
FIG. 20 is a flowchart for explaining a method of projecting an image on a pre-identified projection surface according to the various embodiments of the present disclosure.
FIG. 21 is a view for explaining a method of setting a crop area according to the various embodiments of the present disclosure.
FIG. 22A to FIG. 22C are views for explaining a method for the electronic device to project an image while avoiding an obstacle according to the various embodiments of the present disclosure.
FIG. 23 is a view for explaining a method for the electronic device to project an image based on an image type according to the various embodiments of the present disclosure.

### [BEST MODE]

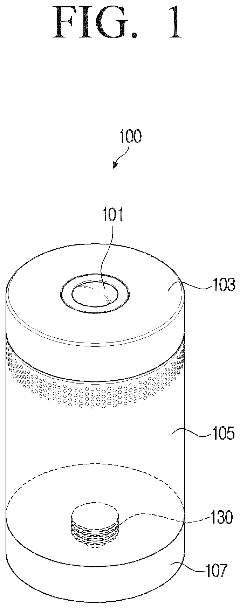

FIG. 1 is a perspective view showing an appearance of an electronic device 100 according to various embodiments of the present disclosure.

Referring to FIG. 1, the electronic device 100 may include a projection lens 101, a head 103, a body 105, a cover 107, or a connector 130.

The electronic device 100 may be any of various types of devices. In particular, the electronic device 100 may be a projector device that enlarges and projects an image on a wall or a screen, and the projector device may be a liquid crystal display (LCD) projector or a digital light processing (DLP) type projector that uses a digital micromirror device (DMD).

In addition, the electronic device 100 may be a home or industrial display device, a lighting device used in daily life, or an audio device including a sound module, or may be implemented as a portable communication device (e.g., smartphone), a computer device, a portable multimedia device, a wearable device, a home appliance, or the like. Meanwhile, the electronic device 100 according to the various embodiments of the present disclosure is not limited to the above-mentioned devices, and may be implemented as the electronic device 100 having two or more functions of the above-mentioned devices. For example, the electronic device 100 may be used as the display device, the lighting device, or the audio device by turning off its projector function and turning on its lighting function or speaker function based on a manipulation of a processor, and may be used as an artificial intelligence (AI) speaker by including a microphone or a communication device.

The projection lens 101 may be disposed on one surface of the body 105, and project light passed through a lens array to the outside of the body 105. The projection lens 101 in the various embodiments may be an optical lens which is low-dispersion coated to reduce chromatic aberration. The projection lens 101 may be a convex lens or a condensing lens, and the projection lens 101 according to the various embodiments may adjust a focus by adjusting positions of a plurality of sub-lenses.

The head 103 may be coupled to one surface of the body 105 to thus support and protect the projection lens 101. The head 103 may be coupled to the body 105 to be swiveled within a predetermined angle range based on one surface of the body 105.

The head 103 may be automatically or manually swiveled by a user or the processor to thus freely adjust a projection angle of the projection lens 101. Alternatively, although not shown in the drawing, the head 103 may be coupled to the body 105 and include a neck extending from the body 105, and the head 103 may be tilted or inclined to thus adjust the projection angle of the projection lens 101.

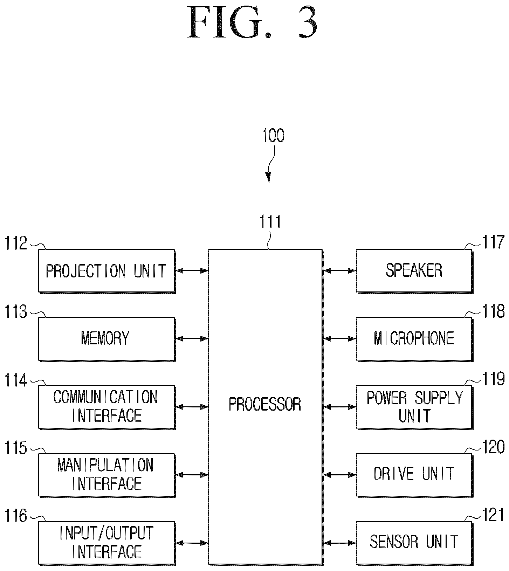

The body 105 is a housing constituting the appearance, and may support or protect components of the electronic device 100 (e.g., components shown in FIG. 3) disposed in the body 105. The body 105 may have a shape close to a cylinder as shown in FIG. 1. However, the shape of the body 105 is not limited thereto, and according to the various embodiments of the present disclosure, the body 105 may be implemented in various geometrical shapes such as a column having polygonal cross sections, a cone, or a sphere.

The body 105 may have a size enabling the body to be gripped or moved by the user with his/her one hand, or may be implemented in a micro size enabling the body to be easily carried or a size enabling the body to be held on a table or to be coupled to the lighting device.

A material of the body 105 may be matt metal or synthetic resin for a user fingerprint or dust not to smear the body. Alternatively, an appearance of the body 105 may be made of a slick glossy material.

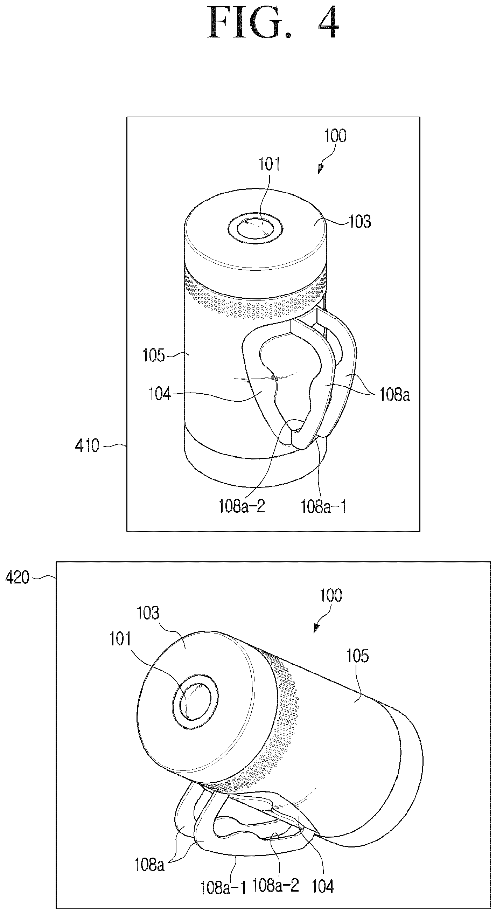

The body 105 may have a friction area disposed on a partial area of the appearance of the body 105 to be gripped and moved by the user. Alternatively, the body 105 may have a folded gripping part or a support 108a (see FIG. 4) disposed in at least the partial area and capable of being gripped by the user.

The electronic device 100 may project light or the image to a desired location by adjusting a direction of the head 103 while the position and angle of the body 105 are fixed and by adjusting the projection angle of the projection lens 101. **In** addition, the head 103 may include a handle that the user may grip after rotating the head in a desired direction.

A plurality of openings may be disposed in an outer circumferential surface of the body 105. Audio output from an audio output unit may be output outside the body 105 of the electronic device 100 through the plurality of openings. The audio output unit may include a speaker, and the speaker may be used for general uses such as reproduction of multimedia or reproduction of recording, and output of a voice.

According to the various embodiments of the present disclosure, the body 105 may include a radiation fan (not shown) disposed therein, and if the radiation fan (not shown) is driven, air or heat in the body 105 may be discharged through the plurality of openings. Accordingly, the electronic device 100 may discharge heat occurring due to the driving of the electronic device 100 to the outside, and prevent overheating of the electronic device 100.

The connector 130 may connect the electronic device 100 with an external apparatus to transmit or receive an electronic signal, or receive power from the external apparatus. The connector 130 according to the various embodiments of the present disclosure may be physically connected with the external apparatus. Here, the connector 130 may include an input/output interface to connect its communication with the external apparatus in a wired or wireless manner or receive the power from the external apparatus. For example, the connector 130 may include a high-definition multimedia interface (HDMI) connection terminal, a universal serial bus (USB) connection terminal, a secure digital (SD) card accommodating groove, an audio connection terminal, or a power consent. Alternatively, the connector 130 may include Bluetooth, wireless-fidelity (Wi-Fi), or a wireless charge connection module, connected with the external apparatus in the wireless manner.

In addition, the connector 130 may have a socket structure connected to an external lighting device, and may be connected to a socket accommodating groove of the external lighting device to receive power. The size and specification of the connector 130 having the socket structure may be implemented in various ways in consideration of an accommodating structure of the external apparatus that may be coupled thereto. For example, a diameter of a joining portion of the connector 130 may be 26 mm according to an international standard E26, and in this case, the electronic device 100 may be coupled to the external lighting device such as a stand in place of a light bulb that is generally used. Meanwhile, in case of being connected to a socket located on an existing ceiling, the electronic device 100 having a structure that projects the image from top to bottom may not be rotated by being coupled to the socket, and in this case, the screen may not be able to be rotated either. Accordingly, the electronic device 100 can project or rotate the screen to the desired position while being socket-coupled to the stand on the ceiling by allowing the head 103 to be swiveled on one surface of the body 105 to have an adjusted projection angle for the electronic device 100 to be rotated even in case of being socket-coupled and receiving power.

The connector 130 may include a coupling sensor, and the coupling sensor may sense whether the connector 130 and the external apparatus are coupled to each other or their coupling state or coupling target, and transmit the same to the processor, and the processor may control an operation of the electronic device 100 based on a received detection value.

The cover 107 may be coupled to or separated from the body 105, and protect the connector 130 for the connector 130 not to be always exposed to the outside. The cover 107 may have a shape continued from the shape of the body 105 as shown in FIG. 1, or may be implemented to correspond to a shape of the connector 130. The cover 107 may support the electronic device 100, and the electronic device 100 may be used by being coupled to or held on an external holder while being coupled to the cover 107.

In the electronic device 100 according to the various embodiments, a battery may be disposed inside the cover 107. The battery may include, for example, a non-rechargeable primary battery, a rechargeable secondary battery, or a fuel cell.

Although not shown in the drawing, the electronic device 100 may include a camera module, and the camera module may capture still and moving images. According to the various embodiments, the camera module may include at least one lens, an image sensor, an image signal processor, or a flash.

Although not shown in the drawing, the electronic device 100 may include a protective case (not shown) to protect the electronic device 100 and facilitate its transportation, or include the stand (not shown) that supports or fixes the body 105, a bracket (not shown) that may be coupled to a wall surface or a partition.

In addition, the electronic device 100 may be connected with the various external apparatuses by using its socket structure to thus provide various functions. The electronic device 100 according to the various embodiments may be connected with an external camera device by using the socket structure. The electronic device 100 may provide an image stored in the camera device connected thereto or an image currently being captured by using a projection unit 112. In another embodiment, the electronic device 100 may be connected to a battery module and supplied with power using the socket structure. Meanwhile, the electronic device 100 may be connected to the external apparatus using the socket structure, which is only one of the various embodiments, and may be connected to the external apparatus using another interface (e.g., USB).

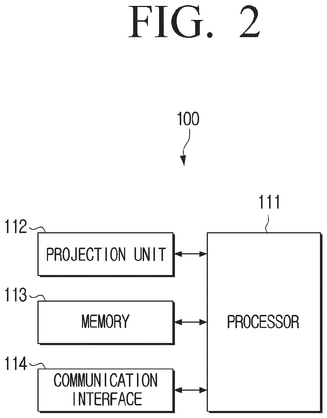

FIG. 2 is a block diagram showing a configuration of the electronic device 100 according to the various embodiments of the present disclosure.

Referring to FIG. 2, the electronic device 100 may include at least one processor 111, the projection unit 112, a memory 113, and a communication interface 114.

At least one processor 111 may perform overall control operations of the electronic device 100. In detail, at least one processor 111 may function to control overall operations of the electronic device 100. A detailed description of at least one processor 111 may be provided with reference to FIG. 3.

The projection unit 112 may be a component for projecting the image (e.g., project image or content) to the outside. A detailed description of the projection unit 112 may be provided with reference to FIG. 3.

Meanwhile, hereinabove, only the brief configuration that configures the electronic device 100 are shown and described. However, in implementation, various configurations may be further provided. A description thereof is provided below with reference to FIG. 3.

FIG. 3 is a block diagram showing a detailed configuration of the electronic device 100 shown in FIG. 2 according to the various embodiments of the present disclosure.

Referring to FIG. 3, the electronic device 100 may include at least one of the processor 111, the projection unit 112, the memory 113, the communication interface 114, a manipulation interface 115, an input/output interface 116, a speaker 117, a microphone 118, a power supply unit 119, a drive unit 120, or a sensor unit 121.

Meanwhile, the configuration shown in FIG. 3 is only one of various embodiments, from which some configurations may be omitted, and to which a new configuration may be added.

Meanwhile, the details already described with reference to FIG. 2 may be omitted.

The processor 111 may be implemented as a digital signal processor (DSP), a microprocessor, or a time controller (TCON), which processes a digital signal. However, the processor 111 is not limited thereto, may include at least one of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machine (ARM) processor, or may be defined by these terms. In addition, the processor 111 may be implemented in a system-on-chip (SoC) or a large scale integration (LSI), in which a processing algorithm is embedded, or may be implemented in the form of a field programmable gate array (FPGA). In addition, the processor 111 may perform various functions by executing computer executable instructions stored in the memory 113.

The projection unit 112 may be a component for projecting the image to the outside. The projection unit 112 according to the various embodiments of the present disclosure may be implemented in any of various projection types (e.g., cathode-ray tube (CRT) type, liquid crystal display (LCD) type, digital light processing (DLP) type, or laser type). As an example, the CRT type may have basically the same principle as the principle of a CRT monitor. The CRT type may display the image on the screen by enlarging the image using a lens in front of a cathode-ray tube (CRT). The CRT type may be classified into a one-tube type and a three-tube type based on the number of cathode-ray tubes, and in the three-tube type, the cathode-ray tubes of red, green, and blue may be separated from one another.

As another example, the LCD type may display the image by allowing light emitted from a light source to pass through a liquid crystal. The LCD type may be classified into a single-panel type and a three-panel type. In case of the three-plate type, light emitted from the light source may be separated into red, green, and blue in a dichroic mirror (which is a mirror that reflects only light of a specific color and allows the rest to pass therethrough), may then pass through the liquid crystal, and may then be collected into one place again.

As yet another example, the DLP type may display the image by using a digital micromirror device (DMD) chip. The DLP type projection unit may include a light source, a color wheel, the DMD chip, a projection lens, etc. Light emitted from the light source may be colored as passing through a rotating color wheel. Light passed through the color wheel may be input into the DMD chip. The DMD chip may include numerous micromirrors and reflect light input into the DMD chip. The projection lens may expand light reflected from the DMD chip to an image size.

As still another example, the laser type may include a diode pumped solid state (DPSS) laser and a galvanometer. The laser type that outputs various colors may use a laser in which three DPSS lasers are respectively installed for red, green, and blue (RGB) colors, and their optical axes overlap each other by using a special mirror. The galvanometer may include a mirror and a high-power motor, and move the mirror at a high speed. For example, the galvanometer may rotate the mirror at up to 40 KHz/sec. The galvanometer may be mounted in a scanning direction, and in general, a projector performs planar scanning, and the galvanometer may thus also be disposed by being divided into x and y axes.

Meanwhile, the projection unit 112 may include light sources of various types. For example, the projection unit 112 may include at least one light source of a lamp, a light emitting diode (LED), or the laser.

The projection unit 112 may output the image in a screen ratio of 4:3, a screen ratio of 5:4, and a wide screen ratio of 16:9, based on a purpose of the electronic device 100, a user setting, or the like, and may output the image having various resolutions such as wide video graphics array WVGA (854*480 pixels), super video graphics array SVGA (800*600 pixels), extended graphics array XGA (1024*768 pixels), wide extended graphics array WXGA (1280*720 pixels), WXGA (1280*800 pixels), super extended graphics array SXGA (1280*1024 pixels), ultra extended graphics array UXGA (1600*1200 pixels), and full high-definition HD (1920*1080 pixels), based on the screen ratio.

Meanwhile, the projection unit 112 may perform various functions for adjusting the output image under control of the processor 111. For example, the projection unit 112 may perform a zoom function, a keystone function, a quick corner (or four corner) keystone function, a lens shift function, or the like.

In detail, the projection unit 112 may enlarge or reduce the image based its distance (i.e., projection distance) to the screen. That is, the projection unit 112 may perform the zoom function based on its distance to the screen. Here, the zoom function may include a hardware method of adjusting a screen size by moving a lens, and a software method of adjusting the screen size by cropping the image, or the like. Meanwhile, in case that the zoom function is performed, it is necessary to adjust a focus of the image. For example, a method of adjusting the focus may include a manual focusing method, an electric focusing method, etc. The manual focusing method may indicate a method of manually adjusting the focus, and the electric focusing method may indicate a method in which the projector automatically adjusts the focus by using a motor built therein in case of performing the zoom function. In case of performing the zoom function, the projection unit 112 may provide a digital zoom function through software, and may provide an optical zoom function in which the zoom function is performed by moving the lens using the drive unit 120.

In addition, the projection unit 112 may perform the keystone correction function. If a height does not match a front projection, the screen may be distorted up or down. The keystone correction function may be a function of correcting a distorted screen. For example, in case that the distortion occurs on the screen in a horizontal direction, the distortion may be corrected using a horizontal keystone, and in case that the distortion occurs on the screen in a vertical direction, the distortion may be corrected using a vertical keystone. The quick corner (or four corner) keystone correction function may be a function of correcting the screen in case that a balance between corner areas of the screen is not appropriate while a central area of the screen is normal. The lens shift function may be a function of moving the screen as it is in case that the screen is outside the screen.

Meanwhile, the projection unit 112 may provide the zoom/keystone/focusing functions by automatically analyzing a surrounding environment and a projection environment without a user input. In detail, the projection unit 112 may automatically provide the zoom/keystone/focusing functions, based on the distance between the electronic device 100 and the screen, information about a space where the electronic device 100 is currently positioned, information about an amount of ambient light, or the like, detected by the sensor (e.g., depth camera, distance sensor, infrared sensor, or light sensor).

In addition, the projection unit 112 may provide a lighting function by using the light source. In particular, the projection unit 112 may provide the lighting function by outputting the light source using the LED. In the various embodiments, the projection unit 112 may include one LED, and in another embodiment, the electronic device 100 may include the plurality of LEDs. Meanwhile, the projection unit 112 may output the light source by using a surface-emitting LED in an implementation example. Here, the surface-emitting LED may be an LED in which an optical sheet is disposed on an upper side of the LED for the light source to be evenly dispersed and output. In detail, in case of being output through the LED, the light source may be evenly dispersed through the optical sheet, and the light source dispersed through the optical sheet may be incident on a display panel.

Meanwhile, the projection unit 112 may provide the user with a dimming function for adjusting intensity of the light source. In detail, the projection unit 112 may control the LED to output the intensity of the light source that corresponds to a received user input in case of receiving the user input for adjusting the intensity of the light source from the user through the manipulation interface 115 (e.g., touch display button or dial).

In addition, the projection unit 112 may provide the dimming function, based on the content analyzed by the processor 111 without the user input. In detail, the projection unit 112 may control the LED to output the intensity of the light source, based on information (e.g., content type or content brightness) about the currently-provided content.

Meanwhile, the projection unit 112 may control a color temperature under the control of the processor 111. Here, the processor 111 may control the color temperature based on the content. In detail, if it is identified that the content is to be output, the processor 111 may obtain color information for each frame of the content whose output is determined. The processor 111 may then control the color temperature based on the obtained color information for each frame. Here, the processor 111 may obtain at least one main color of the frame based on the color information for each frame. The processor 111 may then control the color temperature based on the obtained at least one main color. For example, the color temperature that the processor 111 may adjust may be classified into a warm type or a cold type. Here, it may be assumed that the frame to be output (hereinafter, output frame) includes a fire scene. The processor 111 may identify (or obtain) that the main color is red based on the color information included in the current output frame. The processor 111 may then identify the color temperature corresponding to the identified main color (red). Here, the color temperature corresponding to the red color may be the warm type. Meanwhile, the processor 111 may use an artificial intelligence model to obtain the color information or main color of the frame. In the various embodiments, the artificial intelligence model may be stored in the electronic device 100 (e.g., memory 113). In another embodiment, the artificial intelligence model may be stored in an external server which may communicate with the electronic device 100.

The memory 113 may be implemented as an internal memory such as a read-only memory (ROM, e.g., electrically erasable programmable read-only memory (EEPROM)) or a random access memory (RAM), included in the processor 111, or as a memory separate from the processor 111. In this case, the memory 113 may be implemented in the form of a memory embedded in the electronic device 100 or in the form of a memory detachable from the electronic device 100, based on a data storage purpose. For example, data for driving the electronic device 100 may be stored in the memory embedded in the electronic device 100, and data for an extension function of the electronic device 100 may be stored in the memory detachable from the electronic device 100.

Meanwhile, the memory embedded in the electronic device 100 may be implemented as at least one of a volatile memory (e.g., dynamic RAM (DRAM), static RAM (SRAM) or synchronous dynamic RAM (SDRAM)), or a non-volatile memory (e.g., one time programmable ROM (OTPROM)), programmable ROM (PROM), erasable and programmable ROM (EPROM), electrically erasable and programmable ROM (EEPROM)), a mask ROM, a flash ROM, a flash memory (e.g., NAND flash or NOR flash), a hard drive, or a solid state drive (SSD), and the memory detachable from the electronic device 100 may be implemented as a memory card (e.g., compact flash (CF), secure digital (SD)), micro secure digital (Micro-SD), mini secure digital (mini-SD), extreme digital (xD), or multi-media card (MMC)) or an external memory which may be connected to a universal serial bus (USB) port (e.g., USB memory), or the like.

The memory 113 may store at least one instruction in the electronic device 100. In addition, the memory 113 may store an operating system (O/S) for driving the electronic device 100. The memory 113 may also store various software programs or applications for operating the electronic device 100 according to the various embodiments of the present disclosure. Further, the memory 113 may include a semiconductor memory such as a flash memory, or a magnetic storage medium such as a hard disk.

In detail, the memory 113 may store various software modules for operating the electronic device 100 according to the various embodiments of the present disclosure, and the processor 111 may control the operation of the electronic device 100 by executing the various software modules stored in the memory 113. That is, the memory 113 may be accessed by the processor 111, and the processor 111 may perform readout, recording, correction, deletion, update and the like of data in the memory 113.

Meanwhile, in the present disclosure, the term "memory 113" may include a storage, a read only memory (ROM), or a random access memory (RAM) in the processor 111, or a memory card (for example, a micro secure digital (SD) card or a memory stick) mounted in the electronic device 100.

The communication interface 114 may be a component for communicating with the various types of external apparatuses by using various types of communication methods. The communication interface 114 may include a wireless communication module or a wired communication module. Here, each communication module may be implemented in the form of at least one hardware chip.

The wireless communication module may be a module that communicates with the external apparatus in the wireless manner. For example, the wireless communication module may include at least one of a wireless-fidelity (Wi-Fi) module, a Bluetooth module, an infrared communication module, or another communication module.

The Wi-Fi module and the Bluetooth module may respectively perform the communication in a Wi-Fi manner and a Bluetooth manner. In case of using the Wi-Fi module or the Bluetooth module, the communication interface may first transmit and receive various connection information such as a service set identifier (SSID) or a session key, connect the communication by using this connection information, and then transmit and receive various information.

The infrared communication module may perform the communication based on infrared data association (IrDA) technology that transmits data in a short distance in the wireless manner by using an infrared ray between visible and millimeter waves.

In addition to the above-described communication manners, another communication module may include at least one communication chip performing the communication based on various wireless communication standards such as Zigbee, third generation (3G), third generation partnership project (3GPP), long term evolution (LTE), LTE advanced (LTE-A), fourth generation (4G), and fifth generation (5G).

The wired communication module may be a module that communicates with the external apparatus in the wired manner. For example, the wired communication module may include at least one of a local area network (LAN) module, an Ethernet module, a pair cable, a coaxial cable, an optical fiber cable, or an ultra wide-band (UWB) module.

The manipulation interface 115 may include various types of input devices. For example, the manipulation interface 115 may include a physical button. Here, the physical button may include a function key, a direction key (e.g., four-direction key), or a dial button. In the various embodiments, the physical button may be implemented as a plurality of keys. In another example, the physical button may be implemented as one key. Here, in case that the physical button is implemented as one key, the electronic device 100 may receive the user input in which the one key is pressed for a critical time or longer. In case of receiving the user input in which one key is pressed for the critical time or longer, the processor 111 may perform a function corresponding to the user input. For example, the processor 111 may provide the lighting function based on the user input.

In addition, the manipulation interface 115 may receive the user input by using a non-contact method. In the case of receiving the user input by using a contact method, a physical force may be required to be transmitted to the electronic device 100. Accordingly, there may be a need for a method of controlling the electronic device 100 regardless of the physical force. In detail, the manipulation interface 115 may receive a user gesture and may perform an operation corresponding to the received user gesture. Here, the manipulation interface 115 may receive the user gesture through the sensor (e.g., image sensor or infrared sensor).

In addition, the manipulation interface 115 may receive the user input by using a touch method. For example, the manipulation interface 115 may receive the user input by using a touch sensor. In the various embodiments, the touch method may be implemented as the non-contact method. For example, the touch sensor may determine whether a user body approaches within a critical distance. Here, the touch sensor may identify the user input even in case that the user does not touch the touch sensor. Meanwhile, in another implementation example, the touch sensor may identify the user input in which the user touches the touch sensor.

Meanwhile, the electronic device 100 may receive the user input in various ways other than the manipulation interface 115 described above. In the various embodiments, the electronic device 100 may receive the user input from an external remote control device. Here, the external remote control device may be a remote control device corresponding to the electronic device 100 (e.g., control device dedicated to the electronic device 100) or the portable communication device (e.g., smartphone or wearable device) of the user. Here, the portable communication device of the user may store an application for controlling the electronic device 100. The portable communication device may obtain the user input from the application stored therein, and transmit the obtained user input to the electronic device 100. The electronic device 100 may receive the user input from the portable communication device, and perform an operation corresponding to the user's control command.

Meanwhile, the electronic device 100 may receive the user input by using voice recognition. In the various embodiments, the electronic device 100 may receive a user voice through the microphone included in the electronic device 100. In the various embodiments, the electronic device 100 may receive the user voice from the microphone or the external apparatus. In detail, the external apparatus may obtain the user voice through the microphone of the external apparatus, and transmit the obtained user voice to the electronic device 100. The user voice transmitted from the external apparatus may be audio data or digital data converted from the audio data (e.g., audio data converted to a frequency domain). Here, the electronic device 100 may perform an operation corresponding to the received user voice. In detail, the electronic device 100 may receive the audio data corresponding to the user voice through the microphone. The electronic device 100 may then convert the received audio data to the digital data. The electronic device 100 may then convert the converted digital data to text data by using a speech-to-text (STT) function. In the various embodiments, the speech-to-text (STT) function may be directly performed by the electronic device 100.

In another embodiment, the speech-to-text (STT) function may be performed by the external server. The electronic device 100 may transmit the digital data to the external server. The external server may convert the digital data into the text data, and obtain control command data based on the converted text data. The external server may transmit the control command data (which may here also include the text data) to the electronic device 100. The electronic device 100 may perform an operation corresponding to the user voice based on the obtained control command data.

Meanwhile, the electronic device 100 may provide a voice recognition function by using one assistance (or an artificial intelligence agent such as Bixby TM), which is only one of the various embodiments, and the electronic device 100 may provide the voice recognition function by using a plurality of assistances. Here, the electronic device 100 may provide the voice recognition function by selecting one of the plurality of assistances based on a trigger word corresponding to the assistance or a specific key included in a remote controller.

Meanwhile, the electronic device 100 may receive the user input by using a screen interaction. The screen interaction may indicate a function in which the electronic device 100 identifies whether a predetermined event is generated through the image projected on the screen (or projection plane), and obtains the user input based on the predetermined event. Here, the predetermined event may be an event in which a predetermined object is identified at a specific position (e.g., position to which a user interface (UI) for receiving the user input is projected). Here, the predetermined object may include at least one of a user body part (e.g., finger), a pointer, or a laser point. The electronic device 100 may identify that the user input is received for selecting the projected UI if it is identified that the predetermined object exists at the position corresponding to the projected UI. For example, the electronic device 100 may project a guide image to display the UI on the screen. The electronic device 100 may then identify whether the user selects the projected UI. In detail, the electronic device 100 may identify that the user selects the projected UI if the predetermined event is identified at the position of the projected UI. Here, the projected UI may include at least one item. Here, the electronic device 100 may perform spatial analysis to identify whether the predetermined event exists at the position of the projected UI. Here, the electronic device 100 may perform the spatial analysis through the sensor (e.g., image sensor, infrared sensor, depth camera, or distance sensor). The electronic device 100 may identify whether the predetermined event is generated at the specific position (i.e., position to which the UI is projected) by performing the spatial analysis. In addition, if it is identified that the predetermined event is generated at the specific position (i.e., position to which the UI is projected), the electronic device 100 may identify that the user input is received for selecting the UI corresponding to the specific position.

The input/output interface 116 may be a component for inputting or outputting at least one of an audio signal or an image signal. The input/output interface 116 may receive at least one of the audio signal or the image signal from the external apparatus, and output the control command to the external apparatus.

In some implementation examples, the input/output interface 116 may be implemented as an interface that inputs and outputs only the audio signal, an interface that inputs and outputs only the image signal, or as one interface that inputs and outputs both the audio signal and the image signal.

Meanwhile, the input/output interface 116 according to the various embodiments of the present disclosure may be implemented as a wired input/output interface of at least one of a high definition multimedia interface (HDMI), a mobile high-definition link (MHL), a universal serial bus (USB), a USB C-type, a display port (DP), a thunderbolt, a video graphics array (VGA) port, a red-green-blue (RGB) port, a D-subminiature (D-SUB), or a digital visual interface (DVI). In the various embodiments, the wired input/output interface may be implemented as an that inputs and outputs only the audio signal or an interface that inputs and outputs only the image signal, or implemented as one interface that inputs and outputs both the audio signal and the image signal.

In addition, the electronic device 100 may receive the data through the wired input/output interface, which is only one of the various embodiments, and the electronic device 100 may receive power through the wired input/output interface. As an example, the electronic device 100 may receive power from an external battery by using the USB C-type, or receive power from an outlet by using a power adapter. As yet another example, the electronic device 100 may receive power from the external apparatus (e.g., laptop computer or monitor) through the display port (DP).

Meanwhile, the audio signal may be input through the wired input/output interface, and the image signal may be input through the wireless input/output interface (or the communication interface). Alternatively, the audio signal may be input through the wireless input/output interface (or the communication interface), and the image signal may be input through the wired input/output interface.

The speaker 117 may be a component for outputting the audio signal. In particular, the speaker 117 may include an audio output mixer, an audio signal processor, or an audio output module. The audio output mixer may mix the plurality of audio signals to be output as at least one audio signal. For example, the audio output mixer may mix an analog audio signal and another analog audio signal (e.g., analog audio signal received from the outside) as at least one analog audio signal. The audio output module may include the speaker or an output terminal. According to the various embodiments, the audio output module may include the plurality of speakers. In this case, the audio output module may be disposed in the body, and audio emitted by covering at least a portion of a diaphragm of the audio output module may pass through a waveguide to be transmitted to the outside of the body. The audio output module may include a plurality of audio output units, and the plurality of audio output units may be symmetrically arranged on the appearance of the body, and the audio may thus be emitted to all directions, i.e., all directions in 360 degrees.

The microphone 118 may be a component for receiving the user voice or another sound and converting the same into the audio data. The microphone 118 may receive the user voice while activated. For example, the microphone 118 may be integrated with the electronic device 100 in the upper, front, or lateral direction of the electronic device 100. The microphone 118 may include various components such as a microphone for collecting the user voice in an analog form, an amplifier circuit for amplifying the collected user voice, an analog to digital (A/D) conversion circuit for sampling the amplified user voice and converting the same into the digital signal, a filter circuit for removing a noise component from the converted digital signal, and the like.

The power supply unit 119 may receive power from the outside and supply power to the various components of the electronic device 100. The power supply unit 119 according to the various embodiments of the present disclosure may receive power in various ways. In the various embodiments, the power supply unit 119 may receive power by using the connector 130 as shown in FIG. 3. In addition, the power supply unit 119 may receive power by using a direct current (DC) power cord of 220 V. However, the electronic device 100 is not limited thereto, and may receive power by using a USB power cord, or may receive power by using a wireless charging method.

In addition, the power supply unit 119 may receive power by using an internal battery or the external battery. The power supply unit 119 according to the various embodiments of the present disclosure may receive power through the internal battery. For example, the power supply unit 119 may charge power of the internal battery by using at least one of the DC power cord of 220 V, the USB power cord, or a USB C-Type power cord, and may receive power through the charged internal battery. In addition, the power supply unit 119 according to the various embodiments of the present disclosure may receive power through the external battery. For example, the power supply unit 119 may receive power through the external battery in case that the electronic device 100 and the external battery are connected to each other through various wired communication methods such as the USB power code, the USB C-type power code, or a socket groove. That is, the power supply unit 119 may directly receive power from the external battery, or charge the internal battery through the external battery and receive power from the charged internal battery.

The power supply unit 119 according to the present disclosure may receive power by using at least one of the aforementioned plurality of power supply methods.

Meanwhile, with respect to power consumption, the electronic device 100 may have the power consumption of a predetermined value (e.g., 43 W) or less due to a socket type, another standard, etc. Here, the electronic device 100 may change the power consumption to reduce the power consumption in case of using the battery. That is, the electronic device 100 may change the power consumption based on the power supply method, power usage amount, or the like.

The drive unit 120 may drive at least one hardware component included in the electronic device 100. The drive unit 120 may generate the physical force and transmit the same to at least one hardware component included in the electronic device 100.

Here, the drive unit 120 may generate driving power for a movement of the hardware component included in the electronic device 100 (for example, movement of the electronic device 100) or a rotation operation of the component (for example, rotation of the projection lens).

The drive unit 120 may adjust a projection direction (or the projection angle) of the projection unit 112. In addition, the drive unit 120 may move the position of the electronic device 100. Here, the drive unit 120 may control a moving member 109 to move the electronic device 100. For example, the drive unit 120 may control the moving member 109 by using a motor.

The sensor unit 121 can include at least one sensor. In detail, the sensor unit 121 may include at least one of a tilt sensor sensing a tilt of the electronic device 100 or the image sensor for capturing the image. Here, the tilt sensor may indicate an accelerometer or a gyro sensor, and the image sensor may indicate a camera or the depth camera. Meanwhile, the tilt sensor may be described as a movement sensor. In addition, the sensor unit 121 may include various sensors other than the tilt sensor or the image sensor. For example, the sensor unit 121 may include the light sensor or the distance sensor. The distance sensor may be a time of flight (ToF) sensor. In addition, the sensor unit 121 may include a light detection and ranging (LiDAR) sensor.

Meanwhile, the electronic device 100 may control the lighting function in linkage with an external device. In detail, the electronic device 100 may receive lighting information from the external device. Here, the lighting information may include at least one of the brightness information or color temperature information, set by the external apparatus. Here, the external device may indicate a device connected to the same network as the electronic apparatus 100 (e.g., internet of things (IoT) device included in the same home/work network) or a device that is not connected to the same network as the electronic apparatus 100 and capable of communicating with the electronic apparatus 100 (e.g., remote control server). For example, it may be assumed that the external lighting device (e.g., IoT device) included in the same network as the electronic device 100 outputs red light having a brightness of 50. The external lighting device (e.g., IoT device) may directly or indirectly transmit the lighting information (e.g., information indicating that red light having the brightness of 50 is output) to the electronic device 100. Here, the electronic device 100 may control the output of the light source based on the lighting information received from the external lighting device. For example, if the lighting information received from the external lighting device includes information to output red light having the brightness of 50, the electronic device 100 may output red light having the brightness of 50.

Meanwhile, the electronic device 100 may control the lighting function based on biometric information. In detail, the processor 111 may obtain user biometric information. Here, the biometric information may include at least one of the body temperature, heart rate, blood pressure, breath, or electrocardiogram of the user. Here, the biometric information may include various information in addition to the information described above. As an example, the electronic device 100 may include a sensor for measuring the biometric information. The processor 111 may obtain the user biometric information through the sensor, and control the output of the light source based on the obtained biometric information. As another example, the processor 111 may receive the biometric information from the external device through the input/output interface 116. Here, the external device may indicate the portable communication device (e.g., smartphone or wearable device) of the user. The processor 111 may obtain the user biometric information from the external device, and control the output of the light source based on the obtained biometric information. Meanwhile, according to an implementation example, the electronic device 100 may identify whether the user is sleeping, and if the user is identified as sleeping (or preparing to sleep), the processor 111 may control the output of the light source based on the user biometric information.

Meanwhile, the electronic device 100 according to the various embodiments of the present disclosure may provide various smart functions.

In detail, the electronic device 100 may be connected to a portable terminal device for controlling the electronic device 100, and the screen output by the electronic device 100 may be controlled by the user input which is input from the portable terminal device. For example, the portable terminal device may be implemented as a smartphone including a touch display, the electronic device 100 may receive screen data provided by the portable terminal device from the portable terminal device and output the data, and the screen output by the electronic device 100 may be controlled based on the user input which is input from the portable terminal device.

The electronic device 100 may be connected to the portable terminal device by using various communication methods such as miracast, airplay, wireless dalvik executable (DEX), and a remote personal computer (PC) method, and may share content or music, provided by the portable terminal device.

In addition, the portable terminal device and the electronic device 100 may be connected to each other by various connection methods. In the various embodiments, the portable terminal device may search for the electronic device 100 and perform wireless connection therebetween, or the electronic device 100 may search for the portable terminal device and perform the wireless connection therebetween. The electronic device 100 may then output the content provided from the portable terminal device.

In the various embodiments, the electronic device 100 may output the content or music being output from the portable terminal device in case that the portable terminal device is disposed around the electronic device 100 and a predetermined gesture (e.g., motion tap view) is then detected through the display of the portable terminal device, while the specific content or music is being output from the portable terminal device.

In the various embodiments, the electronic device 100 may output the content or music being output from the portable terminal device in case that the portable terminal device becomes close to the electronic device 100 by a predetermined distance or less (e.g., non-contact tap view), or the portable terminal device touches the electronic device 100 twice at short intervals (e.g., contact tap view) while the specific content or music is being output from the portable terminal device.

The above embodiment describes that the screen provided by the portable terminal device is the same as the screen provided by the electronic device 100. However, the present disclosure is not limited thereto. That is, in case that the portable terminal device and the electronic device 100 are connected to each other, the portable terminal device may output a first screen provided by the portable terminal device, and the electronic device 100 may output a second screen provided by the portable terminal device, which is different from the first screen. For example, the first screen may be a screen provided by a first application installed in the portable terminal device, and the second screen may be a screen provided by a second application installed in the portable terminal device. For example, the first screen and the second screen may be the screens different from each other that are provided by one application installed in the portable terminal device. In addition, for example, the first screen may be a screen including the UI in a remote controller form for controlling the second screen.

The electronic device 100 according to the present disclosure may output a standby screen. For example, the electronic device 100 may output the standby screen in case that the electronic device 100 and the external apparatus are not connected to each other or in case that there is no input received from the external apparatus for a predetermined time. A condition for the electronic device 100 to output the standby screen is not limited to the above-described example, and the standby screen may be output based on various conditions.

The electronic device 100 may output the standby screen in the form of a blue screen, and the present disclosure is not limited thereto. For example, the electronic device 100 may obtain an atypical object by extracting only the shape of a specific object from the data received from the external apparatus, and output the standby screen including the obtained atypical object.

Meanwhile, the electronic device 100 may further include a display (not shown).

The display (not shown) may be implemented as any of various types of displays such as a liquid crystal display (LCD), an organic light emitting diode (OLED) display, and a plasma display panel (PDP). The display (not shown) may also include a driving circuit, a backlight unit, and the like, which may be implemented in a form such as an amorphous silicon thin film transistor (a-si TFT), a low temperature poly silicon (LTPS) TFT, or an organic TFT (OTFT). Meanwhile, the display (not shown) may be implemented as a touch screen coupled with a touch sensor, a flexible display, a three-dimensional (3D) display, or the like. In addition, the display (not shown) according to the various embodiments of the present disclosure may include not only a display panel for outputting the image, but also a bezel for housing the display panel. In particular, the bezel may include the touch sensor (not shown) for detecting user interaction according to the various embodiments of the present disclosure.

Meanwhile, the electronic device 100 may further include a shutter unit (not shown).

The shutter unit (not shown) may include at least one of a shutter, a fixing member, a rail, or a body.

Here, the shutter may block light output from the projection unit 112. Here, the fixing member may fix a position of the shutter. Here, the rail may be a path for moving the shutter and the fixing member. Here, the body may be a component including the shutter and the fixing member.

FIG. 4 is a perspective view showing an appearance of the electronic device 100 according to the various embodiments of the present disclosure.

Referring to Embodiment 410 in FIG. 4, the electronic device 100 may include the support (or "handle") 108a.

The support 108a in the various embodiments may be the handle or a ring, provided for the user to grip or move the electronic device 100, or the support 108a may be a stand that supports the body 105 while the body 105 is laid down in a lateral direction.

The support 108a may be connected to the body 105 by having a hinge structure to be coupled to or separated from the outer circumferential surface of the body 105, and may be selectively separated from or fixed to the outer circumferential surface of the body 105 based on a user need. The number, shape, or arrangement structure of the support 108a may be implemented in various ways without any restrictions. Although not shown in the drawing, the support 108a may be built in the body 105, and taken out to be used by the user as needed, or the support 108a may be implemented as a separate accessory and may be detachable from the electronic device 100.

The support 108a may include a first support surface 108a-1 and a second support surface 108a-2. The first support surface 108a-1 may be one surface facing the outside of the body 105 while the support 108a is separated from the outer circumferential surface of the body 105, and the second support surface 108a-2 may be one surface facing the inside of the body 105 while the support 108a is separated from the outer circumferential surface of the body 105.

The first support surface 108a-1 may be developed from a lower portion of the body 105 to an upper portion of the body 105 while being farther away from the body 105, and the first support surface 108a-1 may have a flat or uniformly curved shape. The first support surface 108a-1 may support the body 105 if the electronic device 100 is held for the outer surface of the body 105 to be in contact with its bottom surface, that is, for the projection lens 101 to be disposed to face the front. In an embodiment in which the electronic device 100 includes two or more supports 108a, the head 103 and the projection angle of the projection lens 101 may be adjusted by adjusting a gap between the two supports 108a or a hinge opening angle thereof.

The second support surface 108a-2 may be a surface that comes into contact with the user or an external holding structure if the support 108a is supported by the user or the external holding structure, and may have a shape corresponding to a grip structure of a user hand or the external holding structure not to slip in case of supporting or moving the electronic device 100. The user may use the electronic device 100 like a flashlight by fixing the head 103 to allow the projection lens 101 to face the front and move the electronic device 100 while holding the support 108a.

A support groove 104 may be disposed in the body 105 while having a groove structure that may accommodate the support 108a if the support 108a is not in use, and may be implemented to be disposed in the outer circumferential surface of the body 105 while having the groove structure that corresponds to a shape of the support 108a. By using the support groove 104, the support 108a may be stored in the outer circumferential surface of the body 105 if the support 108a is not in use, and the outer circumferential surface of the body 105 may be maintained to be slick.

Alternatively, the support 108a may be stored in the body 105 and taken out of the body 105 if the support 108a is needed. In this case, the support groove 104 may be recessed into the body 105 to accommodate the support 108a, and the second support surface 108a-2 may be in close contact with the outer circumferential surface of the body 105, or the support groove 104 may include a separate door (not shown) that opens and closes the support groove 104.

Although not shown in the drawing, the electronic device 100 may include various types of accessories that aid in the use or storage of the electronic device 100. For example, the electronic device 100 may include a protective case (not shown) to easily transport the electronic device 100 while protecting the electronic device 100. Alternatively, the electronic device 100 may include a tripod (not shown) that supports or fixes the body 105 or a bracket (not shown) that is coupled to an external surface to fix the electronic device 100.

Embodiment 420 in FIG. 4 shows that the electronic device 100 in Embodiment 410 is held in contact with the bottom surface.

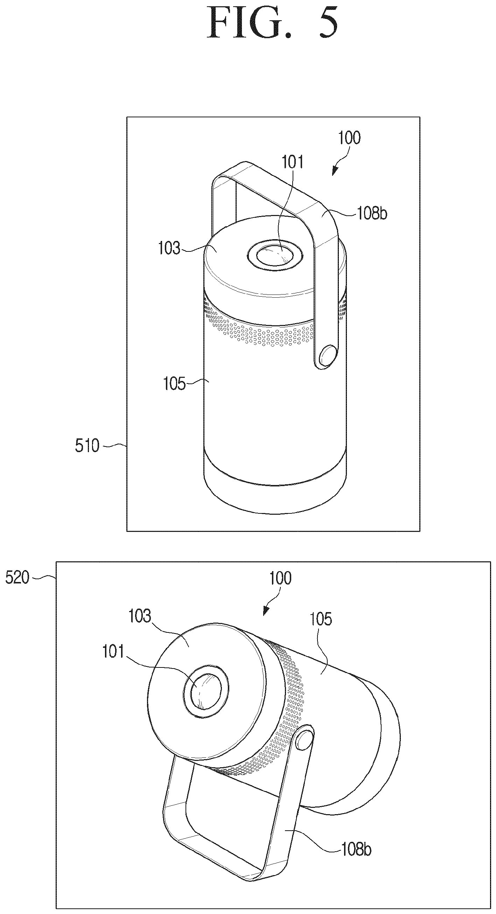

FIG. 5 is a perspective view showing an appearance of the electronic device 100 according to the various embodiments of the present disclosure.

Referring to Embodiment 510 in FIG. 5, the electronic device 100 may include a support (or "the handle") 108b.

The support 108b in the various embodiments may be the handle or the ring, provided for the user to grip or move the electronic device 100. Alternatively, the support 108b may be a stand that supports the body 105 to be directed at an arbitrary angle while the body 105 is laid down in the lateral direction.

In detail, the support 108b may be connected to the body 105 at a predetermined point (e.g., 2/3 to 3/4 of a body height) of the body 105. If the support 108b is rotated toward the body, the support 108 may support the body 105 to face an arbitrary angle while the body 105 is laid down in the lateral direction.

Embodiment 520 in FIG. 5 shows a state where the electronic device 100 in Embodiment 510 is held in contact with the bottom surface.

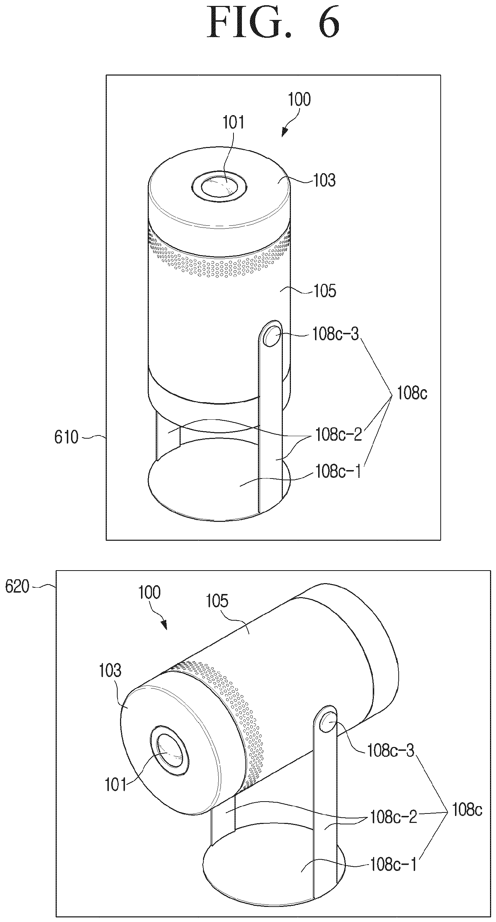

FIG. 6 is a perspective view showing an appearance of the electronic device 100 according to the various embodiments of the present disclosure.

Referring to Embodiment 610 in FIG. 6, the electronic device 100 may include a support (or "pedestal") 108c.

The support 108c in the various embodiments may include a base plate 108c-1 and two support members 108c-2, provided to support the electronic device 100 on a ground. Here, the two support members 108c-2 may each connect the base plate 108c-1 and the body 105 to each other.

In the various embodiments of the present disclosure, the two support members 108c-2 may have the same height, and each cross section of the two support members 108c-2 may thus be coupled or separated by a groove and a hinge member 108c-3, disposed on the outer circumferential surface of the body 105.

Each of the two support members may be hinge-connected to the body 105 at a predetermined point on the body 105 (e.g., 1/3 to 2/4 of the body height).

If the two support members and the body are coupled to each other by the hinge members 108c-3, the body 105 may be rotated around an imaginary horizontal axis formed by the two hinge members 108c-3 to thus adjust the projection angle of the projection lens 101.

Embodiment 620 in FIG. 6 shows a state where the electronic device 100 in Embodiment 610 is rotated.

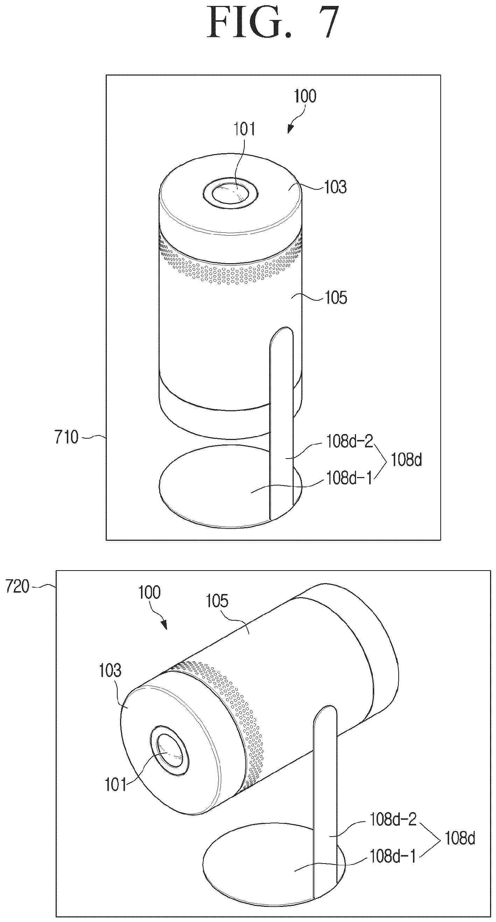

FIG. 6 shows an embodiment in which the two support members 108c-2 are connected to the body 105. However, the present disclosure is not limited thereto, and as shown in FIG. 7, one support member and the body 105 may be connected to each other by one hinge member.

FIG. 7 is a perspective view showing an appearance of the electronic device 100 according to the various embodiments of the present disclosure.

Referring to Embodiment 710 in FIG. 7, the electronic device 100 may include a support (or "the pedestal") 108d.

The support 108d in the various embodiments may include a base plate 108d-1 provided to support the electronic device 100 on the ground and one support member 108d-2 connecting the base plate 108c-1 and the body 105 to each other.

In addition, the cross section of one support member 108d-2 may be coupled or separated by a groove and the hinge member (not shown), disposed on the outer circumferential surface of the body 105.

If one support member 108d-2 and the body 105 are coupled to each other by one hinge member (not shown), the body 105 may be rotated around an imaginary horizontal axis formed by one hinge member (not shown).

Embodiment 720 in FIG. 7 shows a state where the electronic device 100 in Embodiment 710 is rotated.

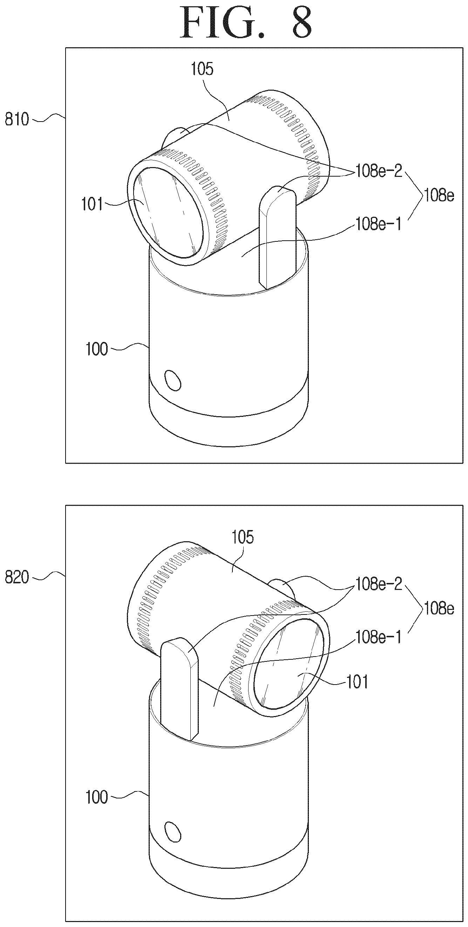

FIG. 8 is a perspective view showing an appearance of the electronic device 100 according to the various embodiments of the present disclosure.

Referring to Embodiment 810 in FIG. 8, the electronic device 100 may include a support (or "the pedestal") 108e.

The support 108e in the various embodiments may include a base plate 108e-1 and two support members 108e-2, provided to support the electronic device 100 on the ground. Here, the two support members 108e-2 may connect the base plate 108e-1 and the body 105 to each other.

In the various embodiments of the present disclosure, the two support members 108e-2 may have the same height, and each cross section of the two support members 108e-2 may thus be coupled or separated by a groove and the hinge member (not shown), disposed on the outer circumferential surface of the body 105.

Each of the two support members may be hinge-connected to the body 105 at the predetermined point on the body 105 (e.g., 1/3 to 2/4 of the body height).

If the two support members and the body are coupled to each other by the hinge members (not shown), the body 105 may be rotated around an imaginary horizontal axis formed by the two hinge members (not shown) to thus adjust the projection angle of the projection lens 101.

Meanwhile, the electronic device 100 may rotate the body 105 including the projection lens 101. The body 105 and the support 108e may be rotated around an imaginary vertical axis at a center point of the base plate 108e-1.

Embodiment 820 in FIG. 8 shows a state where the electronic device 100 in Embodiment 810 is rotated.

Meanwhile, the support shown in FIG. 4, 5, 6, 7 or 8 is only one of the various embodiments, and the electronic device 100 may have the support in any of various positions or shapes.

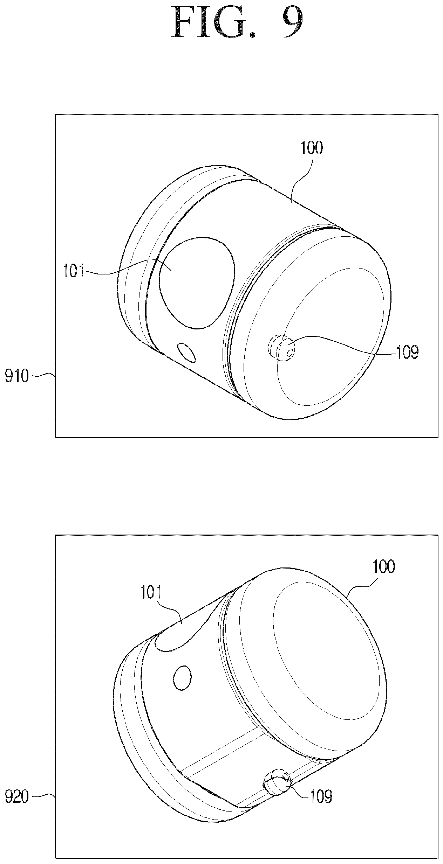

FIG. 9 is a perspective view showing an appearance of the electronic device 100 according to the various embodiments of the present disclosure.

Referring to Embodiment 910 in FIG. 9, the electronic device 100 may include the moving member 109. The moving member 109 may indicate a member for moving the electronic device 100 from a first position to a second position in a space where the electronic device 100 is disposed. The electronic device 100 may control the moving member 109 to move the electronic device 100 by using a force generated by the drive unit 120.

Embodiment 920 in FIG. 9 may be a drawing of the electronic device 100 in Embodiment 910 viewed from a different direction.

Meanwhile, a detailed operation of the processor 111 according to the present disclosure may be described using the following drawing.

The processor 111 may identify the projection surface using the sensor unit 121.

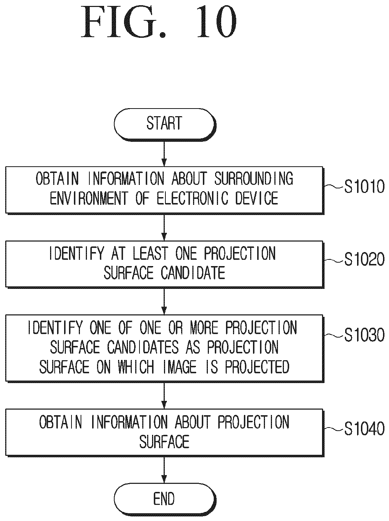

In detail, referring to FIG. 10, the processor 111 may obtain information about a surrounding environment of the electronic device 100 using the sensor unit 121 (S1010).

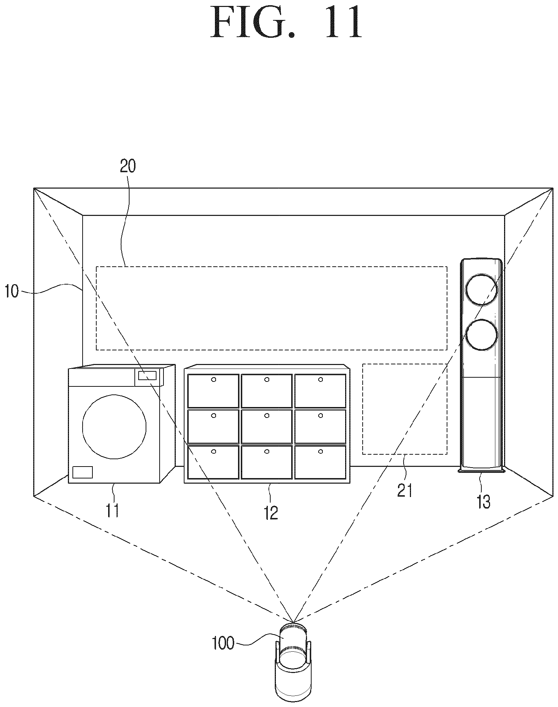

In addition, the processor 111 may identify at least one projection surface candidate based on the information about the surrounding environment of the electronic device 100 (S1020). For example, as shown in FIG. 11, the processor 111 may identify areas of a wall surface 10 surrounding the electronic device 100 that excludes obstacles 11, 12, and 13 as one or more projection surface candidates 20 and 21.

In addition, if one or more projection surface candidates are identified, the processor 111 may identify one of one or more projection surface candidates as the projection surface on which the projection image is projected (S1030).

For example, the processor 111 may obtain the user input for selecting one of one or more projection surface candidates. In addition, the processor 111 may identify the projection surface candidate selected from one or more projection surface candidates as the projection surface.

Alternatively, the processor 111 may identify one of one or more projection surface candidates as the projection surface based on the color, curvature, size, or ratio of one or more projection surface candidates.

In detail, the processor 111 may identify the projection surface candidate whose horizontal length is a predetermined value (e.g., 1 m) or more as the projection surface. Alternatively, the processor 111 may identify the projection surface candidate whose color is a solid color other than black and similar to white as the projection surface candidate. Alternatively, the processor 111 may identify the projection surface candidate whose vertical length to horizontal length ratio is a predetermined value (4:1, 1:4, or 16:9) or close to the predetermined value as the projection surface candidate.

In addition, the processor 111 may obtain information about the projection surface using the sensor unit 121 (S1040). In detail, the processor 111 may obtain the information about the projection surface using the image sensor, a depth sensor, or the distance sensor. Here, the information about the projection surface may include at least one of a ratio of the projection surface, a horizontal length of the projection surface, or a vertical length of the projection surface.

In addition, the processor 111 may identify whether the ratio of the projection surface is different from a ratio of the image to be projected on the projection surface.

Here, the image may indicate the image to be projected on the projection surface. In addition, the image may be stored in the memory 113, received from the external apparatus through the communication interface 114, or obtained through the input/output interface.

Meanwhile, in the present disclosure, the ratio may indicate the ratio of the vertical length to the horizontal length or a ratio of the vertical length to the horizontal length. For example, the ratio of the projection surface may indicate the ratio of the vertical length to the horizontal length of the projection surface. Alternatively, the ratio of the image may indicate the ratio of the vertical length to the horizontal length of the image. Alternatively, a ratio of an area of interest may indicate a ratio of a vertical length of the area of interest to a horizontal length of the area of interest.

If the ratio of the projection surface is the same as the ratio of the image, the processor 111 may project the image on the projection surface without cropping the image.

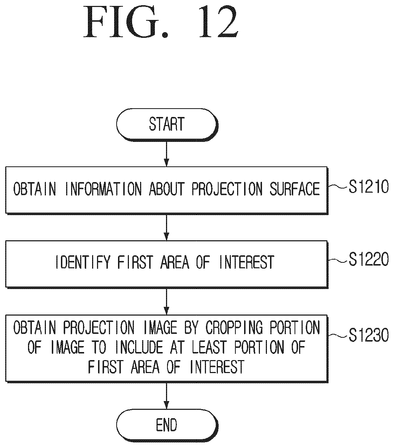

In addition, if the projection surface and the image have different ratios, the processor 111 may obtain a projection image by cropping a portion of the image, and project the obtained projection image on the identified projection surface. A detailed method for the processor 111 to obtain the projection image by cropping a portion of the image is described with reference to FIG. 12.

Referring to FIG. 12, the processor 111 may obtain the information about the projection surface (S1210). In addition, the processor 111 may identify a first area of interest (ROI) in the image (S 1220).

In detail, the processor 111 may obtain a saliency map of the image. Here, the saliency map may indicate a map that represents a saliency value for each pixel of the projection image. In addition, the saliency value may indicate a probability that each pixel of the image belongs to an object of interest or the area of interest.

In addition, the processor 111 may identify the first area of interest in the image based on the saliency map. Here, the processor 111 may identify an area in the saliency map, where a saliency value of a predetermined saliency value (e.g., 0.6) or more is concentrated, as the first area of interest. Here, the first area of interest may be an area that includes the object of interest.

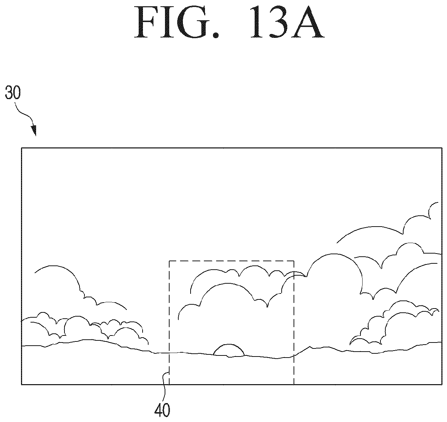

For example, as shown in FIG. 13A, the processor 111 may identify an area in an image 30, where the saliency value of the predetermined saliency value or more is concentrated, as a first area of interest 40. Here, the first area of interest 40 may be an area that includes the sun, which is the object of interest.

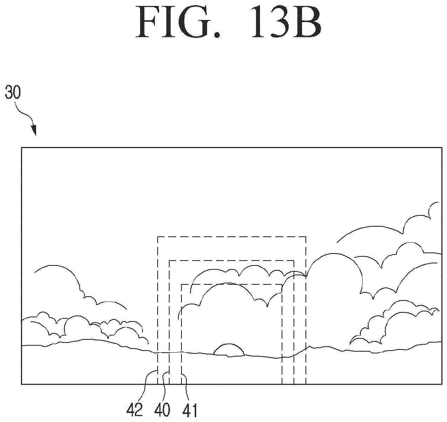

Meanwhile, in the present disclosure, a size of the area of interest may be changed based on the saliency value for identifying the area of interest. In detail, referring to FIG. 13B, the processor 111 may identify the area of interest 40 having a first size based on the first saliency value (e.g., 0.6). In addition, the processor may identify an area of interest 41 having a second size smaller than the first size based on a second saliency value (e.g., 0.4) smaller than the first saliency value. In addition, the processor 111 may identify an area of interest 42 having a third size larger than the first size based on a third saliency value (e.g., 0.8) larger than the first saliency value.

Meanwhile, according to an embodiment of the present disclosure, the processor 111 may identify the plurality of areas of interest, and identify the first area of interest based on the user input for selecting the first area of interest from the plurality of areas of interest.

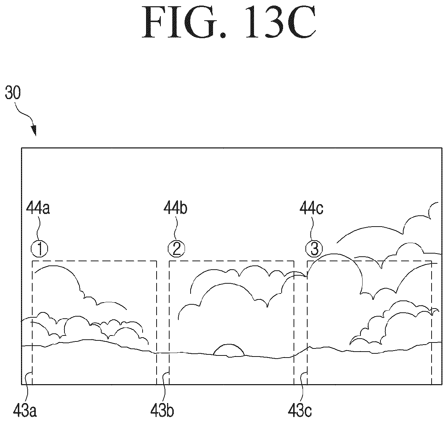

In detail, as shown in FIG. 13C, the processor 111 may identify a plurality of areas of interest 43a, 43b, and 43c, control the display to display the plurality of areas of interest 43a, 43b, and 43c together with at least a portion of the image 30 on the display, or control the projection unit 112 to display the plurality of areas of interest 43a, 43b, and 43c on the projection surface.

Here, the processor 111 may display identification information 47, 48, or 49 for each of the plurality of areas of interest 43a, 43b, and 43c. The identification information 44a, 44b, or 44c for each of the plurality of areas of interest 43a, 43b, and 43c may be displayed as numbers such as 1, 2, and 3 as shown in FIG. 13C, which is only an embodiment, and the plurality of areas of interest may be displayed in various forms.

In addition, the processor 111 may obtain the user input for selecting one of the plurality of areas of interest 43a, 43b, and 43c through the manipulation interface 115, the microphone 118, or the camera module.

For example, the processor 111 may obtain the user input for selecting one of the plurality of areas of interest 43a, 43b, and 43c through a physical button, such as an arrow key (e.g., up, down, or left and right arrow keys) included in the manipulation interface 115.

Alternatively, the processor 111 may obtain a user voice input for selecting a specific area of interest from the plurality of areas of interest 43a, 43b, and 43c through the microphone 118. Here, the user voice may be a voice that includes the identification information corresponding to the specific area of interest. For example, the user voice input for selecting the specific area of interest from the plurality of areas of interest 43a, 43b, and 43c may be "Select area 1 of interest." or "Select area 1."

Alternatively, the processor 111 may detect a user gesture for selecting the specific area of interest from the plurality of areas of interest 43a, 43b, and 43c through the camera module. For example, the user gesture for selecting the specific area of interest from the plurality of areas of interest 43a, 43b, and 43c may be a gesture of pointing with a finger to the specific area of interest.

In addition, if the specific area of interest is selected from the plurality of areas of interest 43a, 43b, and 43c, the processor 111 may identify the selected specific area of interest as the first area of interest.

In addition, if the first area of interest is identified, the processor 111 may obtain the projection image by cropping a portion of the image to include at least a portion of the first area of interest (S1230). Here, the projection image may indicate the remaining image excluding the cropped portion of the image.

In addition, the processor 111 may obtain the projection image by cropping a portion of the image to include at least a portion of the first area of interest based on the information about the projection surface and information about the first area of interest.

According to an embodiment of the present disclosure, the processor 111 may obtain the projection image by cropping a portion of the image to include at least a portion of the first area of interest in the projection image.

Here, the processor 111 may obtain the projection image by cropping a portion of the image for a ratio of the projection image to be the same as the ratio of the projection surface.

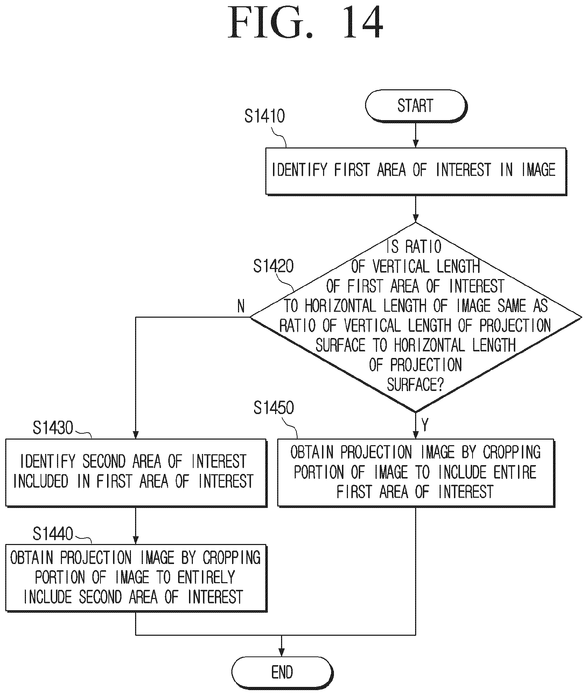

In detail, referring to FIG. 14, if the first area of interest in the image is identified (S1410), the processor 111 may identify whether a ratio of a vertical length of the first area of interest to the horizontal length of the image is the same as the ratio of the vertical length of the projection surface to the horizontal length of the projection surface (S1420).

If the ratio of the vertical length of the first area of interest to the horizontal length of the image is not the same as the ratio of the horizontal length of the projection surface to the vertical length of the projection surface (S1420-N), the processor 111 may identify a second area of interest included in the first area of interest (S1430). Here, the second area of interest may be an area corresponding to the ratio of the projection surface and the horizontal length of the image.

In detail, the processor 111 may identify the second area of interest for a ratio of a vertical length of the second area of interest to the horizontal length of the image to be the same as the ratio of the projection surface.

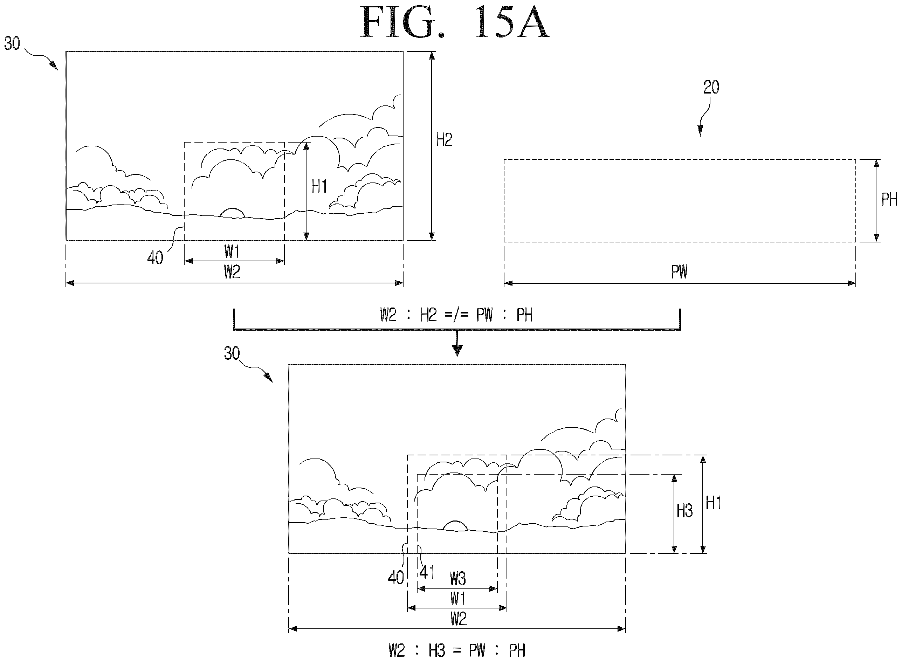

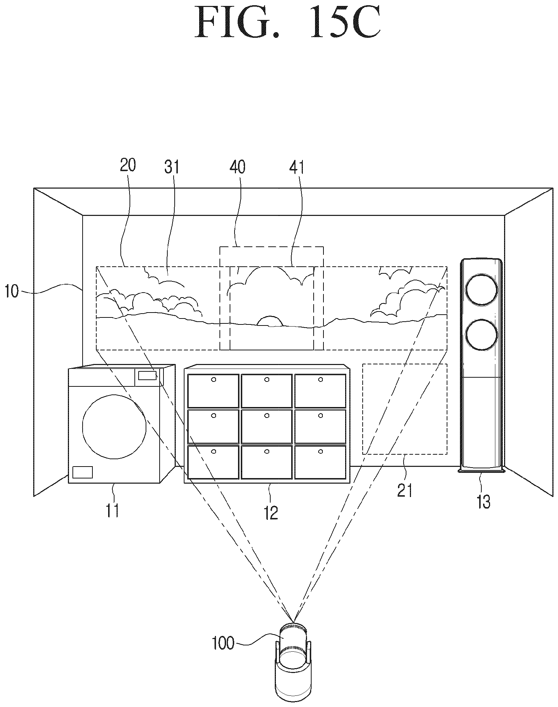

For example, as shown in FIG. 15A, a horizontal length of the image 30 may be W2, and a vertical length of the image 30 may be H2. In addition, a horizontal length of the first area of interest 40 may be W1, and a vertical length of the first area of interest 40 may be H1. In addition, a horizontal length of a projection surface 20 may be PW, and a vertical length of the projection surface may be PH.

Here, a ratio of H2 to W1 may be different from a ratio of PH to PW. Here, the processor 111 may identify the second area of interest 41 included in the first area of interest 40. In detail, the processor 111 may identify the second area of interest 41 for a ratio of a vertical length H3 of the second area of interest 41 to the horizontal length W2 of the image 30 to be the same as the ratio of the projection surface 20 (the ratio of PH to PW).

Here, the processor 111 may adjust a size of the second area of interest 41 by adjusting the saliency value for identifying the area of interest. In detail, the processor 111 may lower the saliency value to be less than the predetermined value for a height of the second area of interest 41 to be lower than a height of the first area of interest. In addition, the processor 111 may identify the second area of interest by using the saliency value for the ratio of the vertical length of the second area of interest to the horizontal length of the image to be the same as the ratio of the projection surface.

Meanwhile, the processor 111 may identify the first area of interest based on the saliency value corresponding to the ratio of the projection surface and the horizontal length of the image. In detail, the memory 113 may store values for the saliency value corresponding to the ratio of the projection surface and the horizontal length of the image in the form of a lookup table, and the processor 111 may obtain the saliency value corresponding to the projection surface. In addition, the processor 111 may identify the first area of interest in the image by using the saliency value corresponding to the projection surface.

In addition, if the second area of interest is identified, the processor 111 may obtain the projection image by cropping a portion of the image to include the entire second area of interest (S1440).

In detail, if the second area of interest is identified, the processor 111 may obtain the projection image by cropping an area in the image that has a height different from that of the second area of interest. Here, the projection image may include the entire second area of interest. That is, the processor 111 may obtain the projection image by maintaining the horizontal length of the image and cropping the image 30 for the vertical length of the image to be the same as the vertical length of the second area of interest.

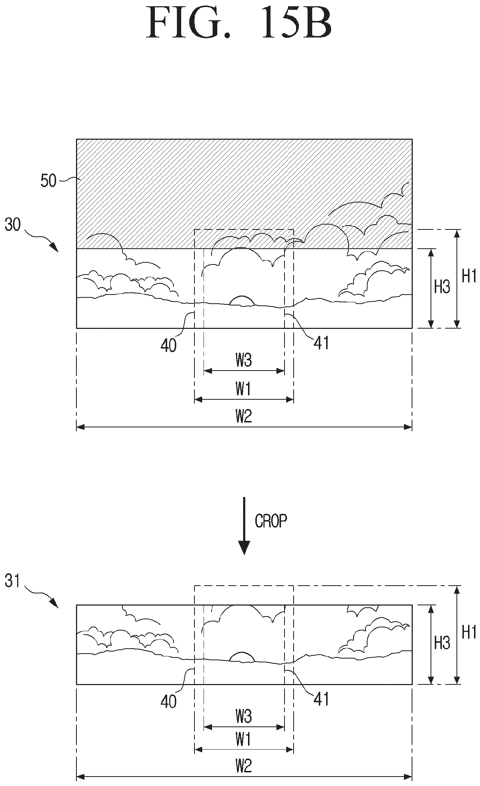

For example, as shown in FIG. 15B, the processor 111 may identify an area 50 in the image 30 that has a height different from that of the second area of interest 41. In addition, the processor 111 may obtain a projection image 31 by cropping the area 50 in the image 30 that has the height different from that the second area of interest 41. Here, a projection image 31a may include a portion of the first area of interest 40 and the entire second area of interest 41. In addition, a horizontal length of the projection image 31a may be the same as the horizontal length of the image 30, and a vertical length of the projection image 31a may be the same as a vertical length of the second area of interest 41.

Meanwhile, if the ratio of the vertical length of the first area of interest to the horizontal length of the image is the same as the ratio of the vertical length of the projection surface to the horizontal length of the projection surface (S1420-Y), the processor 111 may obtain the projection image by cropping the image to include the entire first area of interest (S1450).

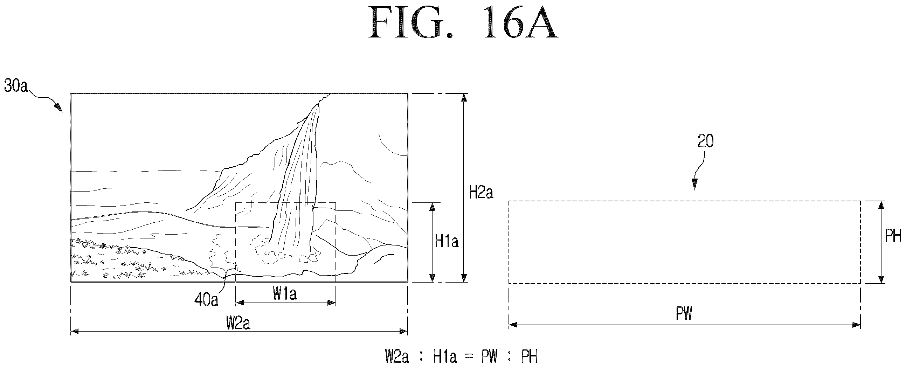

For example, as shown in FIG. 16a, a horizontal length of an image 30a may be W2a, and a vertical length of the image 30a may be H2a. In addition, a horizontal length of a first area of interest 40a may be W1a, and a vertical length of the first area of interest 40a may be H1a. In addition, the horizontal length of the projection surface 20 may be PW, and the vertical length of the projection surface may be PH. In addition, a ratio of H1a to W2a may be the same as the ratio of PH to PW.

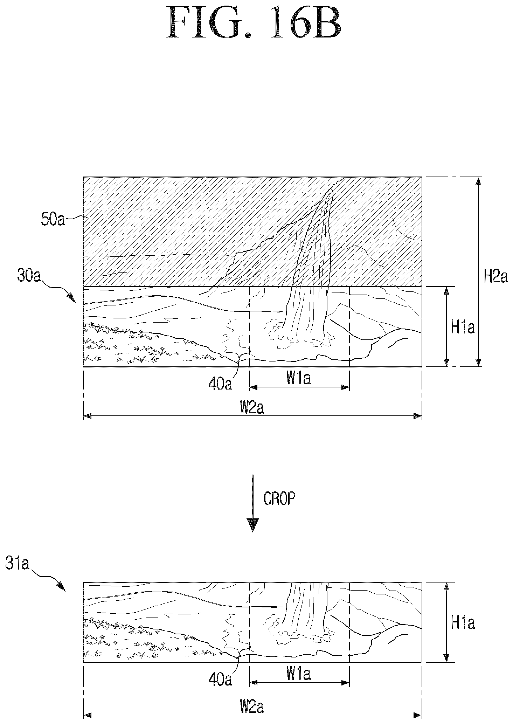

Here, the processor 111 may obtain the projection image 31a by cropping an area 50a having a height different from that of the first area of interest 40a in the image 30a, as shown in FIG. 16B. Here, the projection image 31a may have the same horizontal length as that of the image 30a, and the same vertical length as that of the first area of interest 40a.

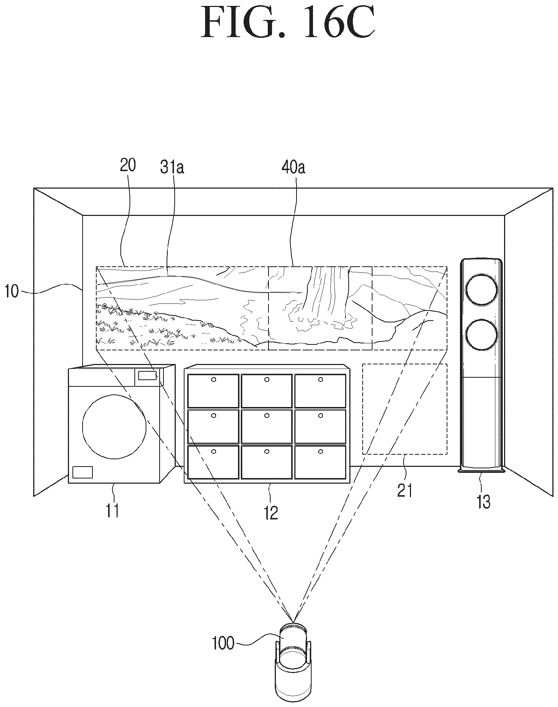

In addition, the processor 111 may project the projection image 31a on the projection surface 20, as shown in FIG. 16C.

According to an embodiment of the present disclosure, the processor 111 may obtain the projection image by cropping a portion of the image for the entire first area of interest to be included in the projection image.

Here, the processor 111 may obtain the projection image by cropping a portion of the image for the ratio of the vertical length of the projection image to the horizontal length to be the ratio of the vertical length of the projection surface or more. Alternatively, the processor 111 may obtain the projection image by cropping a portion of the image for the ratio of the vertical length of the first area of interest to the horizontal length of the projection image to be the ratio of the vertical length to the horizontal length of the projection surface or more.

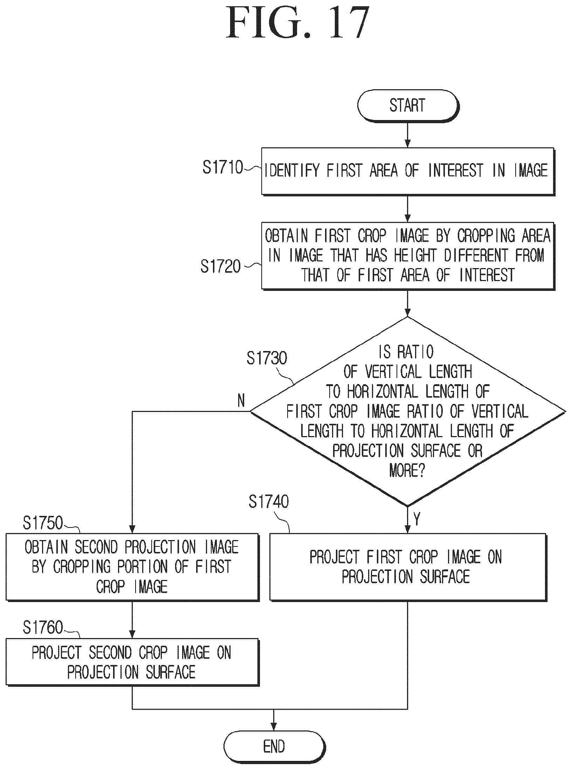

In detail, referring to FIG. 17, if the first area of interest in the image is identified (S1710), the processor 111 may obtain a first crop image by cropping an area in the image that has a height different from that of the first area of interest (S1720).

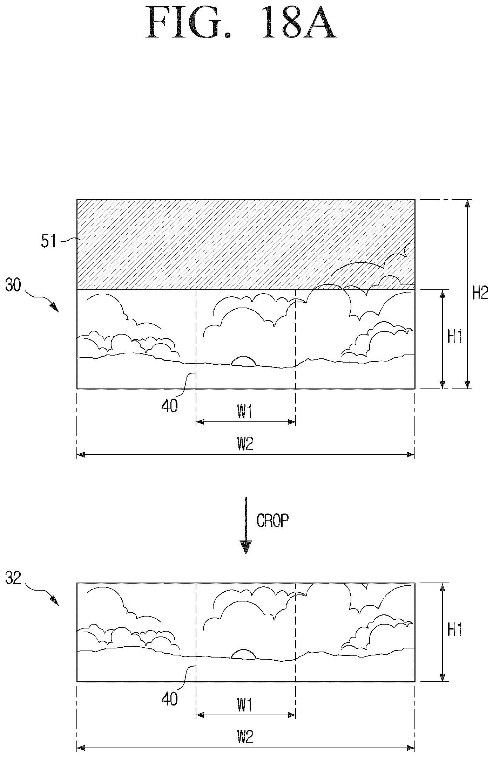

For example, as shown in FIG. 18A, if the first area of interest 40 in the image 30 is identified, the processor 111 may obtain a first crop image 32 by cropping an area 51 in the image 30 that has a height different from that of the first area of interest 40.

In addition, the processor 111 may compare a ratio of the first crop image with the ratio of the projection surface. In detail, the processor 111 may identify whether a ratio of the vertical length to the horizontal length of the first crop image is the ratio of the vertical length to the horizontal length of the projection surface or more (S1730).

In addition, if the ratio of the vertical length to the horizontal length of the first crop image is the ratio of the vertical length to the horizontal length of the projection surface or more (S1730-N), the processor 111 may project the first crop image as projection image on the projection surface (S1740). Here, the vertical length of the first crop image may be the vertical length of the first area of interest.

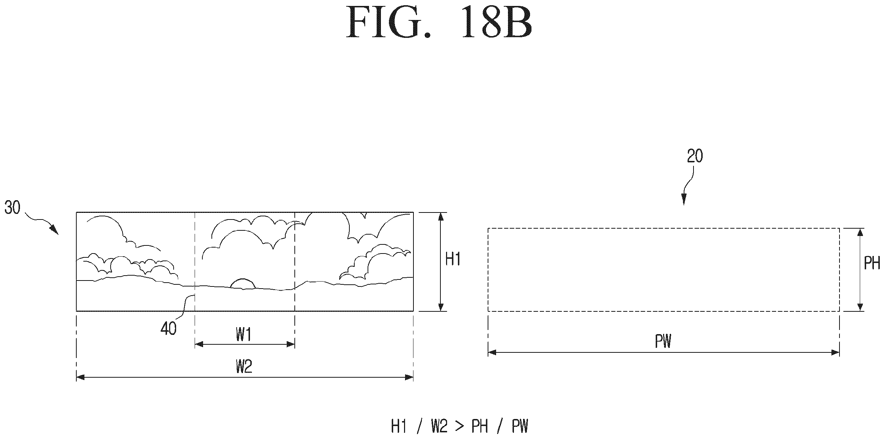

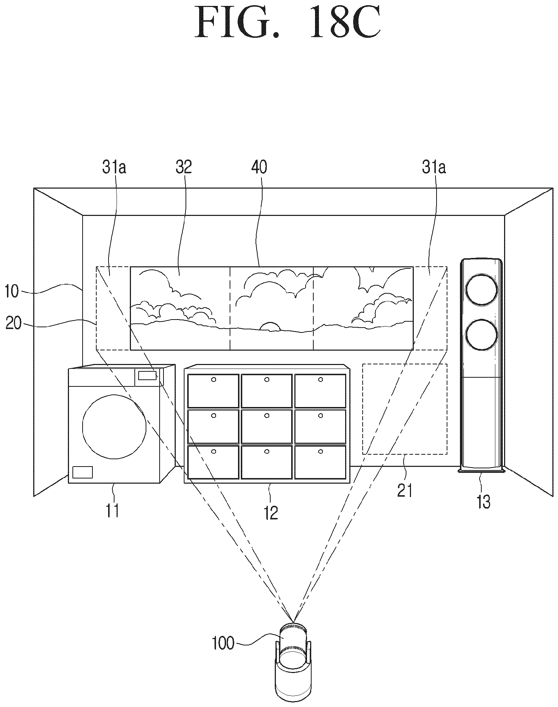

For example, as shown in FIG. 18B, if the ratio of the vertical length to the horizontal length H1/W2 of the first crop image 32 is the ratio PH/PW of the vertical length PH to the horizontal length PW of the projection surface 20 or more, the processor 111 may project the first crop image 32 on the projection surface 20, as shown in FIG. 18C.

Meanwhile, here, the processor 111 may either not project any light, project light of a specific color, or project a widget image on an area 23 or 24 of the projection surface 20, where the first crop image 32, which is the projection image, is not projected.

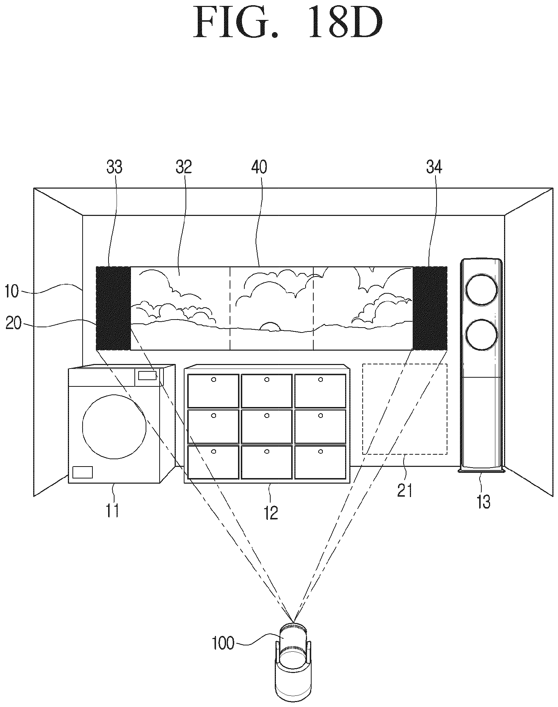

For example, as shown in FIG. 18D, the processor 111 may project black light on the left area 23 and the right area 24 in the first crop image 32. Accordingly, the electronic device 100 may provide the user with an immersive experience of the image projected on the projection surface 20.

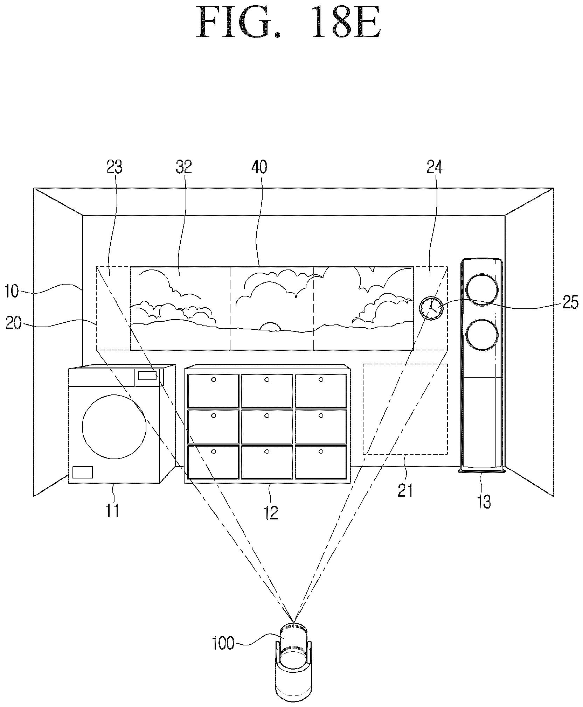

Alternatively, the processor 111 may project the widget image on the left area 23 or the right area 24 in the first crop image 32. Here, the widget image may include an object such as a clock. For example, as shown in FIG. 18E, the processor 111 may project a widget image 25 including the clock object on the right area 24 in the first crop image 32.

In addition, if the ratio of the vertical length to the horizontal length of the first crop image is less than the ratio of the vertical length to the horizontal length of the projection surface (S1730-Y), the processor 111 may obtain the second crop image by cropping a portion of the first crop image (S1750). In detail, the processor 111 may obtain the second crop image by cropping a portion of the first crop image for the ratio of the vertical length of the first area of interest to the horizontal length of the second crop image to be the same as the ratio of the vertical length PH to the horizontal length PW of the projection surface 20.

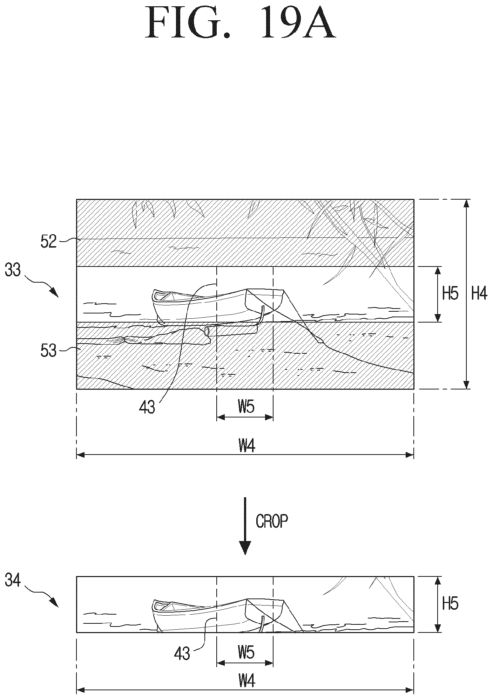

For example, as shown in FIG. 19A, the processor 111 may identify a first area of interest 43 in an image 33. In addition, the processor 111 may obtain a first crop image 34 by cropping an area 52 or 53 that has a height different from that of the first area of interest 43 in the image 33.

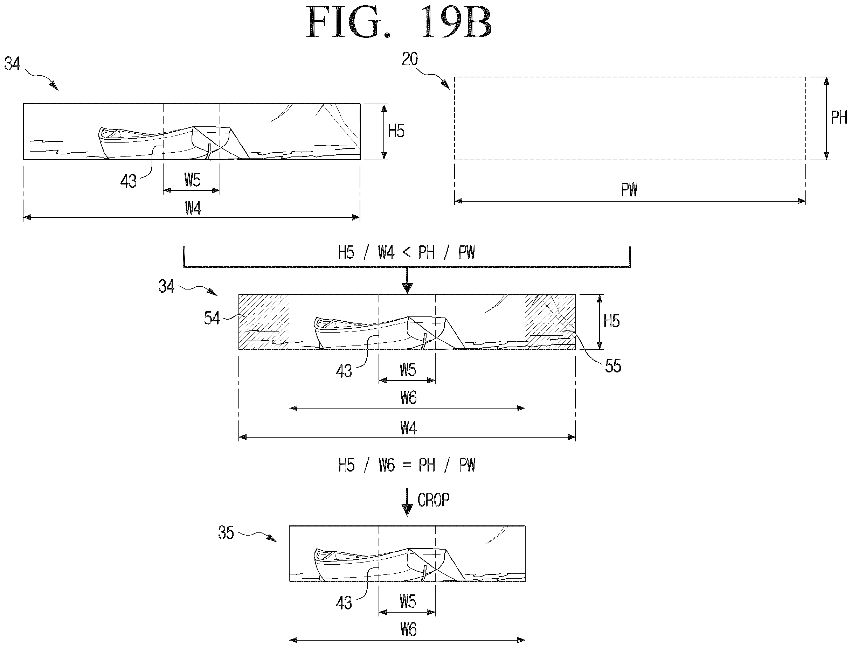

In addition, as shown in FIG. 19B, a ratio of the vertical length H5 to a horizontal length W4 of the first crop image may be less than the ratio of the vertical length PH to the horizontal length PW of the projection surface 20. Here, the processor 111 may obtain a second crop image 35 by cropping a portion of the first crop image 34. In detail, the processor 111 may obtain the second crop image 35 by cropping the first crop image 34 for a ratio of the vertical length H5 to the horizontal length W6 of the second crop image 35 to be the same as the ratio of the vertical length PH to the horizontal length PW of the projection surface 20.

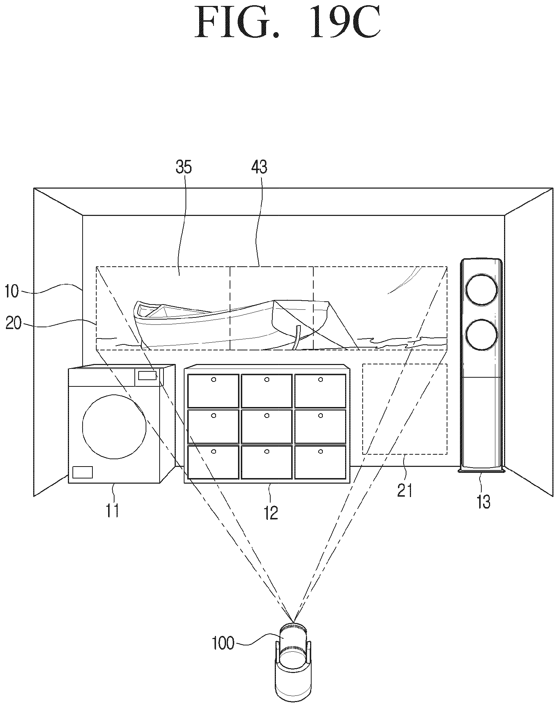

In addition, as shown in FIG. 19C, the processor 111 may project the second crop image 35 on the projection surface 20.

Meanwhile, according to an embodiment of the present disclosure, the processor 111 may identify a plurality of candidate crop areas, and obtain the projection image by cropping a portion of the image based on the user input for selecting a crop area from the plurality of candidate crop areas. Here, the crop area may indicate an area in the image that the user wants to crop.

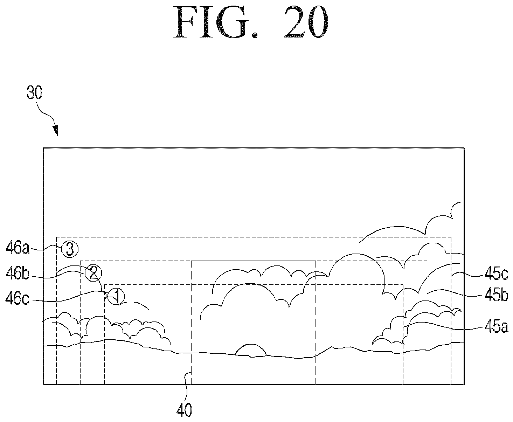

In detail, as shown in FIG. 20, the processor 111 may identify a plurality of candidate crop areas 45a, 45b, and 45c based on the identified first area of interest 40. Here, each of the plurality of candidate crop areas 45a, 45b, and 45c may be an area that includes at least a portion of the first area of interest 40.

In addition, the processor 111 may control the display to display the identified plurality of candidate crop areas 45a, 45b, and 45c, or control the projection unit 112 to display the same on the projection surface. Here, the processor 111 may control the projection unit 112 to display identification information 46a, 46b, or 46c for each of the identified plurality of candidate crop areas 45a, 45b, and 45c.

In addition, the processor 111 may obtain the user input for selecting a specific area from the plurality of candidate crop areas 45a, 45b, and 45c through the manipulation interface 115, the microphone 118, or the camera module. Here, the selected specific area may be the crop area.

For example, the processor 111 may obtain the user input for selecting the specific area from the plurality of candidate crop areas 45a, 45b, and 45c through the physical button, such as the arrow key (e.g., up, down, left, or right arrow key) included in the manipulation interface 115.

Alternatively, the processor 111 may obtain the user voice input for selecting the specific area from the plurality of candidate crop areas 45a, 45b, and 45c through the microphone 118. Here, the user voice may be a voice that includes the identification information corresponding to the specific area. For example, the user voice input for selecting the specific area from the plurality of candidate crop areas may be "Select candidate crop area 1." or "Select area 1."

Alternatively, the processor 111 may detect the user gesture for selecting the specific area from the plurality of candidate crop areas through the camera module. For example, the user gesture for selecting the specific area from the plurality of candidate crop areas may be a gesture of pointing with a finger to the crop area.

In addition, if the specific area is selected from the plurality of candidate crop areas as the crop area, the processor 111 may obtain the projection image by cropping a portion of the image to include the crop area.

Meanwhile, according to an embodiment of the present disclosure, the processor 111 may identify the projection surface, obtain the projection image by cropping the image, and project the projection image on the projection surface. Here, if the image is projected on the projection surface, the processor 111 may store projection history information of projecting the image on the projection surface in the memory 113. Here, the projection history information may be information stored by matching a set value used to project the image on the projection surface with the projection surface.

Accordingly, if the projection surface is re-identified, the processor 111 may project the image on the re-identified projection surface based on a projection history.

In detail, the processor 111 may project the image on the re-identified projection surface by using the pre-stored set value. Here, the set value may indicate a set value for projecting the image on the projection surface. In detail, the set value may include at least one of the saliency value for identifying the first area of interest in the image, the saliency value for identifying the second area of interest, information about the crop area, information about a crop location, information about a crop ratio, information about a projection location, information about the projection light (for example, projecting black light on an area of the projection surface where the image is not projected), information about the projection widget, or information about the projection image (for example, the ratio of the projection image or the size of the projection image).

That is, the electronic device 100 may sense its surrounding environment and, if the predetermined projection surface is identified, the electronic device 100 may project the image on the predetermined projection surface.

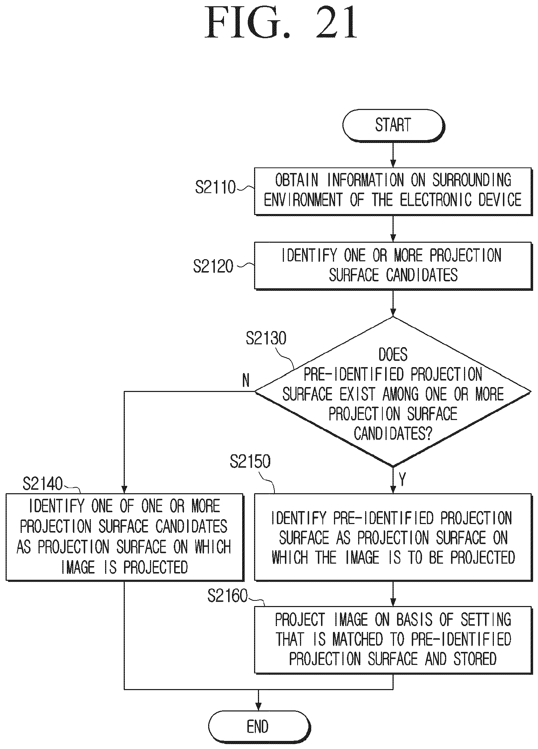

A method for the electronic device 100 to re-identify the projection surface and project the image on the projection surface by using the pre-stored set value is described with reference to FIGS. 21A to 21D.

In detail, referring to FIG. 21A, the processor 111 may sense the surrounding environment of the electronic device 100 using the sensor unit 121 (S2110).

In addition, the processor 111 may identify one or more projection surface candidates based on the information about the surrounding environment of the electronic device 100 (S2120).

In addition, the processor 111 may identify whether a projection surface pre-stored in the memory 113 exists among one or more projection surface candidates (S2130).

In detail, the memory 113 may store information about the pre-identified projection surface. Here, the information about the pre-identified projection surface may include information about a feature point of the pre-identified projection surface image.

Here, the processor 111 may identify whether the pre-identified projection surface exists among the one or more projection surface candidates by extracting a feature point from the image of one or more projection surface candidates, obtained through the image sensor, and comparing the extracted feature point with information about the feature point of the pre-identified projection surface.

In addition, if the pre-identified projection surface does not exist among one or more projection surface candidates (S2130-N), the processor 111 may identify one of one or more projection surface candidates as the projection surface on which the image is projected (S2140). Here, the method for the processor 111 to identify one of one or more projection surface candidates as the projection surface is as described above.

In addition, if the pre-identified projection surface exists among one or more projection surface candidates (S2130-Y), the processor 111 may identify the pre-identified projection surface as the projection surface on which the image is to be projected (S2150).

In addition, the processor 111 may project the image on the projection surface based on the setting that is matched to the pre-identified projection surface and stored in the memory 113 (S2160).

In detail, the processor 111 may project the image on the projection surface at the same location, shape, or size as the image previously projected on the pre-identified projection surface.

Meanwhile, if the pre-identified projection surface exists among one or more projection surface candidates, the obstacle may be disposed between the electronic device 100 and the projection surface 20. In this case, the electronic device 100 may be moved to a position where the electronic device 100 may project the image on the projection surface 20 without the obstacle disposed between the electronic device 100 and the projection surface 20. If the movement is completed, the electronic device 100 may project the image on the pre-identified projection surface.

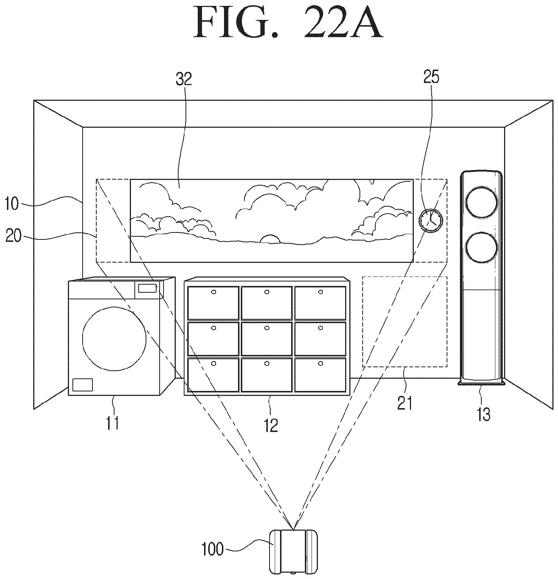

For example, as shown in FIG. 22A, the electronic device 100 may project the projection image 32 and the clock widget image 25 on the projection surface 20 at the first position. In addition, the electronic device 100 may store the projection history information in the memory 113. Here, the projection history may be a history in which the electronic device 100 projects the projection image 32 and the clock widget image 25 on the projection surface 20 at the first position. In addition, the projection history information may include information about the set value used by the electronic device 100 to project the projection image 32 and the clock widget image 25 on the projection surface 20 at the first position.

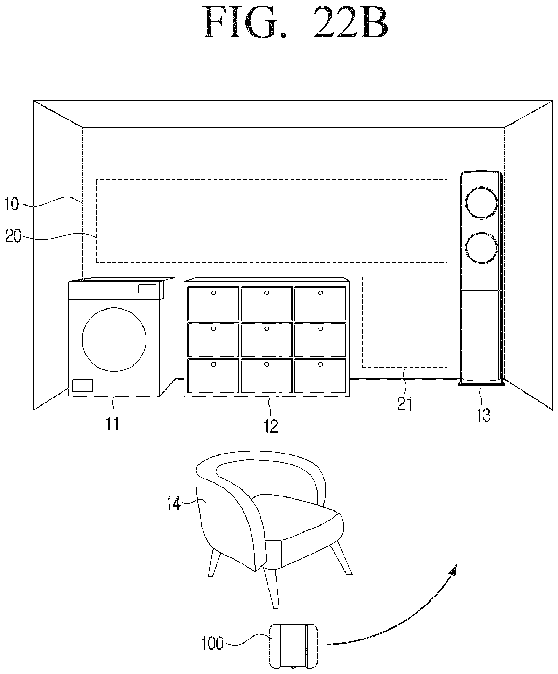

The electronic device 100 may then identify one or more projection surface candidates, and may identify the pre-identified projection surface 20 from one or more projection surface candidates 20 and 21. Here, as shown in FIG. 22B, if an obstacle 14 is disposed between the electronic device 100 and the projection surface 20, the electronic device 100 may not be able to project the image on the projection surface 20.

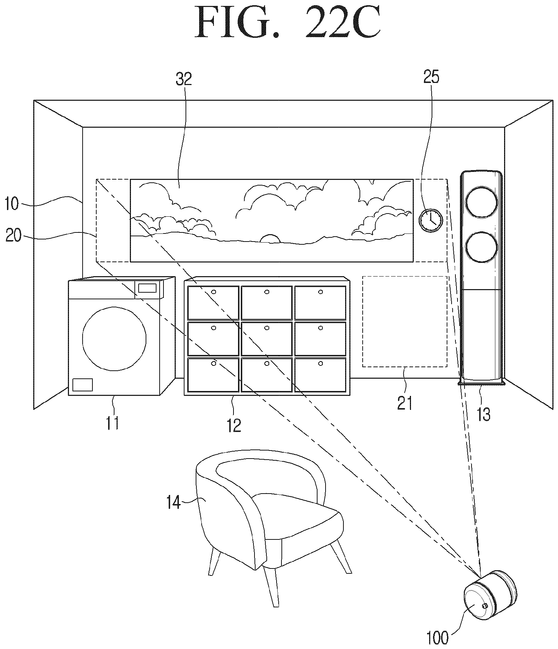

To solve this problem, as shown in FIG. 22C, the electronic device 100 may be moved to the second position where the obstacle 14 does not exist between the electronic device 100 and the projection surface 20, and project the projection image 32 and the clock widget image 25 on the projection surface 20 by using the set value stored in the memory 113.

Meanwhile, the electronic device 100 may project the projection image obtained by cropping the image on the projection surface, or project an un-cropped image on the projection surface.

According to an embodiment of the present disclosure, the electronic device 100 may determine whether to crop the image based on an image type. Here, the image type may indicate the image obtained from the external server or the image obtained from a user terminal device.

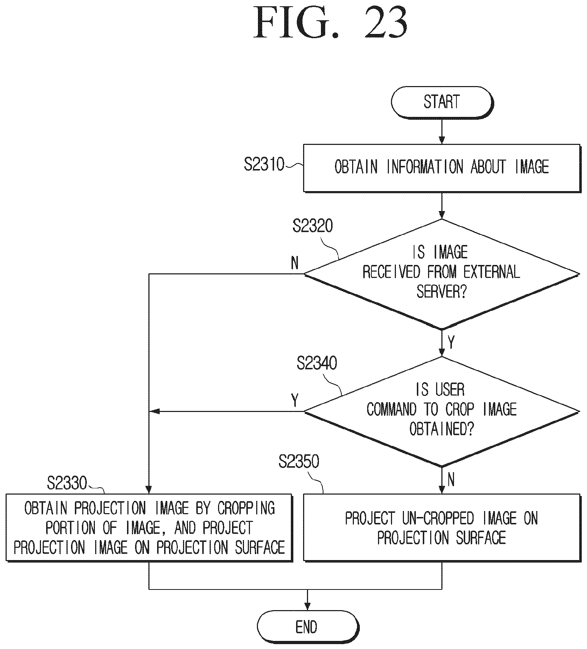

In detail, referring to FIG. 23, the processor 111 may obtain information about the image (S2310). Here, the processor 111 may obtain the information about the image from a content provider or obtain the information about the image from the user.

In detail, the processor 111 may obtain the information about the image provided by the content provider from the external server. In addition, the processor 111 may obtain the information about the image provided by the user from the user terminal device.

In addition, the processor 111 may identify whether the obtained image is received from the external server (S2320).

If the image is not received from the external server (S2320-N), that is, if the image is received from the user terminal device, the processor 111 may obtain the projection image by cropping a portion of the image, and project the obtained projection image on the projection surface (S2330). Here, the method for the processor 111 to crop a portion of the image may be the same as the method described above.

In addition, in case of receiving the image from the external server (S2320-Y), the processor 111 may identify whether a user command to crop the image is obtained (S2340).

In detail, the processor 111 may control the speaker 117 to output a voice asking whether to crop the image, or control the projection unit 112 to output a UI asking whether to crop the image.

In addition, the processor 111 may obtain the user command on whether to crop the image. Here, the user command may be the user command to crop the image and project the cropped image or the user command to project the un-cropped image.

Accordingly, in case of obtaining the user command to crop the image (S2340-Y), the processor 111 may obtain the projection image by cropping a portion of the image, and project the obtained projection image on the projection surface (S2330).

In addition, in case of obtaining the user command to un-crop the image (S2340-N), the processor 111 may project the un-cropped image on the projection surface (S2350).

Here, the processor 111 may project the image for the center of the un-cropped image to be disposed at the center of the projection surface where the center is identified. Alternatively, the processor 111 may identify an area of interest in the un-cropped image, and project the image for the center of the area of interest to be disposed at the center of the projection surface where the center is identified.

Meanwhile, the term "~er/~or" or "module" used in the present disclosure may include a unit including hardware, software, or firmware, and may be used interchangeably with the term, for example, logic, a logic block, a component, or a circuit. The "~er/~or" or "module" may be an integrally formed component, or a minimum unit or part performing one or more functions. For example, the module may include an application-specific integrated circuit (ASIC).

The various embodiments of the present disclosure may be implemented by software including an instruction stored in a machine-readable storage medium (for example, a computer-readable storage medium). A machine may be a device that invokes the stored instruction from the storage medium, may be operated based on the invoked instruction, and may include the electronic device 100 according to the disclosed embodiments. If the instruction is executed by the processor, the processor may directly perform a function corresponding to the instruction or other components may perform the function corresponding to the instruction under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

According to an embodiment, the method according to the various embodiments disclosed in this document may be provided by being included in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore^{™}). In case of the online distribution, at least a portion of the computer program product may be at least temporarily stored in a storage medium such as a memory of a server of a manufacturer, a server of an application store or a relay server, or be temporarily provided.

Each of the components (for example, modules or programs) according to the various embodiments may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner or a heuristic manner, at least some of the operations may be performed in a different order or be omitted, or other operations may be added.

## Claims

1. An electronic device comprising:
at least one sensor;
a projection unit for projecting an image;
a memory for storing at least one instruction; and
at least one processor,
wherein the at least one processor is configured to
obtain information about a projection surface using the at least one sensor, identify a first area of interest in an image to be projected on the projection surface,
obtain a projection image by cropping a portion of the image to include at least a portion of the first area of interest, based on the information about the projection surface and information about the first area of interest, and
control the projection unit to project the projection image on the projection surface.

2. The device as claimed in claim 1, wherein the at least one processor is configured to
identify a second area of interest in the first area of interest based on a ratio of the vertical length to the horizontal length of the projection surface, and
crop a portion of the projection image to include the second area of interest.

3. The device as claimed in claim 2, wherein the information about the projection surface includes a first ratio of the vertical length to the horizontal length of the projection surface, and
the at least one processor is configured to identify the second area of interest for a second ratio of a vertical length of the second area of interest to the horizontal length of the projection image to be the first ratio.

4. The device as claimed in claim 1, wherein the at least one processor is configured to crop a portion of the projection image for the first area of interest to be included in the projection image.

5. The device as claimed in claim 4, wherein the information about the projection surface includes a first ratio of the vertical length to the horizontal length of the projection surface, and
the at least one processor is configured to crop a portion of the projection image for a second ratio of a vertical length of the first area of interest to the horizontal length of the projection image to be the first ratio or more.

6. The device as claimed in claim 1, wherein the information about the projection surface is information about a ratio of the vertical length to the horizontal length of the projection surface.

7. The device as claimed in claim 1, wherein the at least one processor is configured to
obtain information about a surrounding environment of the electronic device using the at least one sensor,
identify one or more projection surface candidates based on the information about the surrounding environment of the electronic device,
obtain a user input for selecting the projection surface from the one or more projection surface candidates, and
obtain information about the selected projection surface.

8. The device as claimed in claim 1, wherein the at least one processor is configured to
obtain information about a surrounding environment of the electronic device using the at least one sensor,
identify a pre-identified projection surface based on the information about the surrounding environment of the electronic device, and
project the cropped projection image on a pre-stored projection surface.

9. The device as claimed in claim 8, further comprising a drive unit for moving the electronic device,
wherein the at least one processor is configured to
control the drive unit to move the electronic device to a position where an obstacle does not exist between the electronic device and the projection surface if the obstacle is identified as existing between the electronic device and the pre-stored projection surface, and
project the cropped projection image on the pre-stored projection surface if the electronic device is moved to the position where the obstacle does not exist between the electronic device and the projection surface.

10. The device as claimed in claim 1, wherein the at least one processor is configured to
obtain a user input on whether to crop a portion of the image obtained from an external server in case of obtaining information about the image from the external server,
obtain the projection image by cropping a portion of the image obtained from the external server, and control the projection unit to project the projection image on the projection surface in case of obtaining the user input for cropping a portion of the image,
control the projection unit to project the image obtained from the external server on the projection surface in case of obtaining the user input for un-cropping a portion of the image, and
obtain the projection image by cropping a portion of the image obtained from a user terminal device, and control the projection unit to project the projection image on the projection surface in case of obtaining the information about the projection image from the user terminal device.

11. The device as claimed in claim 1, wherein the at least one processor is configured to
obtain the projection image by cropping a portion of the image, and control the projection unit to project the projection image on the projection surface if a first ratio of the vertical length to the horizontal length of the image and a second ratio of the vertical length to the horizontal length of the projection surface are different from each other, and
control the projection unit to project the image on the projection surface if the first ratio and the second ratio are the same as each other.

12. A method for controlling an electronic device, the method comprising:
obtaining information about a projection surface using at least one sensor;
identifying a first area of interest in an image to be projected on the projection surface;
obtaining a projection image by cropping a portion of the image to include at least a portion of the first area of interest, based on the information about the projection surface and information about the first area of interest; and
projecting the projection image on the projection surface.

13. The method as claimed in claim 12, wherein in the obtaining of the projection image by cropping a portion of the image,
a second area of interest is identified in the first area of interest based on a ratio of the vertical length to the horizontal length of the projection surface, and
a portion of the projection image is cropped to include the second area of interest.

14. The method as claimed in claim 13, wherein the information about the projection surface includes a first ratio of the vertical length to the horizontal length of the projection surface, and
in the obtaining of the projection image by cropping a portion of the image, the second area of interest is identified for a second ratio of a vertical length of the second area of interest to the horizontal length of the projection image to be the first ratio.

15. A non-transitory computer-readable recording medium including a program for executing a method for controlling an electronic device, wherein the method includes
obtaining information about a projection surface using at least one sensor,
identifying a first area of interest in an image to be projected on the projection surface, obtaining a projection image by cropping a portion of the image to include at least a portion of the first area of interest, based on the information about the projection surface and information about the first area of interest, and
projecting the projection image on the projection surface.
